# EUROPEAN PATENT APPLICATION

(11) **EP 3 627 744 A1**
(43) Date of publication of application: **25.03.2020**
(21) Application number: 17917327.3
(22) Date of filing: 23.08.2017
(51) Int. Cl.: H04L 5/00

(54) **DATA TRANSMISSION METHOD AND DEVICE**

(30) Priority: 13.07.2017 CN 201710571091
(71) Applicant: Huawei Technologies Co., Ltd., Longgang District Shenzhen, Guangdong 518129 (CN)
(72) Inventor: DU, Zhenguo, Shenzhen Guangdong 518129 (CN)
(74) Representative: Pfenning, Meinig & Partner mbB
(86) International application number: PCT/CN2017/098684
(87) International publication number: WO 2019/010762

(57) **Abstract**

Embodiments of this application relate to the field of communication technologies, and provide a data transmission method and a device, to resolve a problem of resource waste caused when DMRS symbols account for a large proportion in OFDM symbols included in a subframe. The method includes: receiving, by a network device, uplink data sent by N terminal devices in a time division multiplexing TDM manner, where the uplink data includes a demodulation reference signal DMRS of each of the N terminal devices, the N terminal devices share a target OFDM symbol, the target OFDM symbol is used to transmit the demodulation reference signal DMRS of each terminal device, and N ≥ 2; and performing, by the network device, channel estimation on an uplink channel of each terminal device based on the DMRS of each terminal device, to obtain corresponding uplink data of each terminal device through parsing.

## Description

This application claims priority to Chinese Patent Application No. 201710571091.8, filed with the Chinese Patent Office on July 13, 2017 and entitled "DATA TRANSMISSION METHOD AND DEVICE", which is incorporated herein by reference in its entirety.

### TECHNICAL FIELD

Embodiments of this application relate to the field of communications technologies, and in particular, to a data transmission method and a device.

### BACKGROUND

With development of communications technologies, a fifth-generation mobile communication technology (English: the 5 Generation Mobile Communication Technology, 5G for short) network is proposed.

In 5G new radio (New Radio, NR), a mini-slot (mini-slot) is a basic unit of resource scheduling. Each mini-slot includes a few orthogonal frequency division multiplexing (Orthogonal Frequency Division Multiplexing, OFDM) symbols. For example, one mini-slot may include a minimum of only two (or even one) OFDM symbols. One 1 ms subframe (Subframe) includes a plurality of OFDM symbols, and therefore one subframe may include a plurality of mini-slots.

As stipulated in 5G NR, each mini-slot includes at least one front-loaded DMRS (front-loaded DMRS) symbol, and the front-loaded DMRS symbol is located in the first symbol of the mini-slot. In this way, DMRS symbols included in one subframe account for a relatively large proportion in OFDM symbols included in the entire subframe, causing a great waste of resources. If the mini-slot includes an additional DMRS (Additional DMRS) symbol in addition to the front-loaded DMRS symbol, the DMRS symbols account for a larger proportion in the OFDM symbols included in the entire subframe, intensifying a waste of resources.

### SUMMARY

This application provides a data transmission method and a device, so as to resolve a problem of resource waste caused when DMRS symbols account for a large proportion in OFDM symbols included in a subframe.

To achieve the foregoing objective, this application uses the following technical solutions:

According to a first aspect, a data transmission method is provided. A network device receives uplink data sent by N terminal devices in a time division multiplexing (Time Division Multiplexing, TDM) manner, where the uplink data includes a demodulation reference signal DMRS of each of the N terminal devices, the N terminal devices herein share a target OFDM symbol, the target OFDM symbol is used to transmit the DMRS of each terminal device, and N ≥ 2; and the network device performs channel estimation on an uplink channel of each terminal device based on the DMRS of each terminal device, to obtain corresponding uplink data of each terminal device through parsing.

The N terminal devices transmit the uplink data in the TDM manner, the N terminal devices share the target OFDM symbol, and the target OFDM symbol is used to transmit the DMRS of each terminal device, in other words, the N terminal devices share one DMRS symbol. This effectively decreases a proportion of DMRS symbols and improves resource utilization.

Optionally, in a possible implementation of this application, before receiving the uplink data sent by the N terminal devices in the TDM manner, the network device sends scheduling information and instruction information to each terminal device, where the scheduling information is used to indicate an uplink data transmission resource of each terminal device, and the instruction information is used to instruct the N terminal devices to share the target OFDM symbol.

The network device pre-determines the scheduling information and the instruction information, and sends the scheduling information and the instruction information that are determined by the network device to a terminal device. In this way, the terminal device can transmit data based on a configuration of the network device.

Optionally, in another possible implementation of this application, the instruction information includes first information whose content is a first numeric value, the first information whose content is the first numeric value is used to instruct each terminal device to use an OFDM symbol sharing manner to transmit the DMRS, and the first numeric value is a value in a preset numeric value set.

In actual application, not all terminal devices can use the OFDM symbol sharing manner to transmit a DMRS. The network device notifies, by sending signaling to a terminal device, the terminal device of whether the OFDM symbol sharing manner can be used to transmit a DMRS. When N = 2, the preset numeric value set may be expressed as {01, 10, 11}, or may be expressed as {1}.

Optionally, in another possible implementation of this application, the instruction information includes second information, and the second information is used to indicate a location of the target OFDM symbol in uplink data transmission resources of the N terminal devices.

A change of the location of the target OFDM symbol in the uplink data transmission resources of the N terminal devices may result in a change of data transmission performance of an entire communications system. The network device notifies, by sending the second information to a terminal device, the terminal device of the location of the target OFDM symbol in the uplink data transmission resources of the N terminal devices, so that the terminal device quickly determines a symbol for sending a DMRS.

Optionally, the first information and the second information may be included in a same piece of information, or may be two pieces of independent information. This is not specifically limited in this application. If the first information and the second information are included in the same piece of information, overheads of the instruction information can be effectively reduced.

Optionally, in another possible implementation of this application, the instruction information includes third information, and the third information is used to indicate a value of N.

In actual application, the network device may adjust, based on a requirement, terminal devices sharing the target OFDM symbols. In this way, a quantity of the terminal devices sharing the target OFDM symbol may change. Therefore, the network device needs to send, to the terminal devices, the quantity N of the terminal devices sharing the target OFDM symbol. The network device adjusts the terminal devices sharing the target OFDM symbol, making resource scheduling more flexible.

Optionally, in another possible implementation of this application, the instruction information includes fourth information, and the fourth information is used to indicate an ordering position of each terminal device in the N terminal devices.

The network device sends the fourth information to a terminal device, so that the terminal device can determine, based on the fourth information, a frequency domain location of a resource element (Resource Element, RE) occupied by the terminal device in a DMRS symbol, or an orthogonal DMRS sequence used by the terminal device.

Optionally, in another possible implementation of this application, the instruction information includes fifth information, where the fifth information is used to indicate a multiplexing manner of an uplink resource occupied by each terminal device in the target OFDM symbol, and the multiplexing manner is frequency division multiplexing (Frequency Division Multiplexing, FDM) or code division multiplexing (Code Division Multiplexing, CDM).

The N terminal devices share the target OFDM symbol. The multiplexing manner of the uplink resource occupied by each terminal device in the target OFDM symbol may be FDM or CDM. The network device sends the fifth information to a terminal device to clearly indicate a multiplexing manner of an uplink resource occupied by the terminal device in the target OFDM symbol.

According to a second aspect, a network device is provided. The network device includes a receiving unit and a processing unit.

Specific functions implemented by various units or modules provided in this application are as follows:
The receiving unit is configured to receive uplink data sent by N terminal devices in a time division multiplexing TDM manner, where the uplink data includes a demodulation reference signal DMRS of each of the N terminal devices, the N terminal devices share a target OFDM symbol, the target OFDM symbol is used to transmit the demodulation reference signal DMRS of each terminal device, and N ≥ 2. The processing unit is configured to perform channel estimation on an uplink channel of each terminal device based on the DMRS of each terminal device that is received by the receiving unit, to obtain corresponding uplink data of each terminal device through parsing.

Further, in a possible implementation of this application, the network device in this application further includes a sending unit. The sending unit is configured to send scheduling information and instruction information to each terminal device, where the scheduling information is used to indicate an uplink data transmission resource of each terminal device, and the instruction information is used to instruct the N terminal devices to share the target OFDM symbol.

Further, in another possible implementation of this application, the instruction information includes first information whose content is a first numeric value, the first information whose content is the first numeric value is used to instruct each terminal device to use an OFDM symbol sharing manner to transmit the DMRS, and the first numeric value is a value in a preset numeric value set.

Further, in another possible implementation of this application, the instruction information includes second information, and the second information is used to indicate a location of the target OFDM symbol in uplink data transmission resources of the N terminal devices.

Further, in another possible implementation of this application, the instruction information includes third information, and the third information is used to indicate a value of N.

Further, in another possible implementation of this application, the instruction information includes fourth information, and the fourth information is used to indicate an ordering position of each terminal device in the N terminal devices.

Further, in another possible implementation of this application, the instruction information includes fifth information, where the fifth information is used to indicate a multiplexing manner of an uplink resource occupied by each terminal device in the target OFDM symbol, and the multiplexing manner is frequency division multiplexing FDM or code division multiplexing CDM.

According to a third aspect, a network device is provided. The network device includes one or more processors, a memory, and a communications interface. The memory, the communications interface, and the one or more processors are connected by using a system bus. The network device communicates with another device by using the communications interface. The memory is configured to store computer program code. The computer program code includes an instruction. When the one or more processors execute the instruction stored in the memory, the network device performs the data transmission method in any one of the first aspect or the possible implementations of the first aspect.

Specifically, the communications interface is configured to receive uplink data sent by N terminal devices in a time division multiplexing TDM manner, where the uplink data includes a demodulation reference signal DMRS of each of the N terminal devices, the N terminal devices share a target OFDM symbol, the target OFDM symbol is used to transmit the demodulation reference signal DMRS of each terminal device, and N ≥ 2. The processor is configured to perform channel estimation on an uplink channel of each terminal device based on the DMRS of each terminal device that is received by the communications interface, to obtain corresponding uplink data of each terminal device through parsing.

Further, in a possible implementation of this application, the communications interface is further configured to send scheduling information and instruction information to each terminal device, where the scheduling information is used to indicate an uplink data transmission resource of each terminal device, and the instruction information is used to instruct the N terminal devices to share the target OFDM symbol.

Further, in another possible implementation of this application, the instruction information includes first information whose content is a first numeric value, the first information whose content is the first numeric value is used to instruct each terminal device to use an OFDM symbol sharing manner to transmit the DMRS, and the first numeric value is a value in a preset numeric value set.

Further, in another possible implementation of this application, the instruction information includes second information, and the second information is used to indicate a location of the target OFDM symbol in uplink data transmission resources of the N terminal devices.

Further, in another possible implementation of this application, the instruction information includes third information, and the third information is used to indicate a value of N.

Further, in another possible implementation of this application, the instruction information includes fourth information, and the fourth information is used to indicate an ordering position of each terminal device in the N terminal devices.

Further, in another possible implementation of this application, the instruction information includes fifth information, where the fifth information is used to indicate a multiplexing manner of an uplink resource occupied by each terminal device in the target OFDM symbol, and the multiplexing manner is frequency division multiplexing FDM or code division multiplexing CDM.

According to a fourth aspect, a computer storage medium is provided. The computer storage medium stores computer program code. When the processor of the network device in the third aspect executes the computer program code, the network device performs the data transmission method in any one of the first aspect or the possible implementations of the first aspect.

According to a fifth aspect, a computer program product including an instruction is further provided. When the computer program product runs on a network device, the network device performs the data transmission method in any one of the first aspect or the possible implementations of the first aspect.

In this application, a name of the network device does not limit a device or a functional module. In actual implementation, these devices or functional modules may be given other names. Each device or functional module falls within the scope of protection defined by the following claims or their equivalents provided that a function of the device or functional module is similar to that in this application.

For specific descriptions of the second aspect, the third aspect, the fourth aspect, the fifth aspect, and various implementations thereof, refer to the detailed descriptions in the first aspect and the implementations of the first aspect. In addition, for beneficial effects of the second aspect, the third aspect, the fourth aspect, the fifth aspect, and various implementations thereof, refer to analysis of the beneficial effects in the first aspect and the implementations of the first aspect. Details are not described herein again.

According to a sixth aspect, a data transmission method is provided. After receiving scheduling information used to indicate an uplink data transmission resource of a first terminal device and instruction information used to instruct N terminal devices to share a target OFDM symbol, the first terminal device sends uplink data on the uplink data transmission resource indicated by the scheduling information, and sends a DMRS included in the uplink data on the target OFDM symbol based on the instruction information, where the scheduling information and the instruction information are sent by a network device. Herein, the first terminal device is one of the N terminal devices, the target OFDM symbol is used to transmit a DMRS of each of the N terminal devices, and N ≥ 2.

The N terminal devices transmit uplink data in a TDM manner, the N terminal devices share the target OFDM symbol, and the target OFDM symbol is used to transmit the DMRS of each terminal device, in other words, the N terminal devices share one DMRS symbol. This effectively decreases a proportion of DMRS symbols and improves resource utilization.

Optionally, in a possible implementation of this application, the instruction information includes first information whose content is a first numeric value, the first information whose content is the first numeric value is used to instruct the first terminal device to use an OFDM symbol sharing manner to transmit the DMRS, and the first numeric value is a value in a preset numeric value set.

In actual application, not all terminal devices can use the OFDM symbol sharing manner to transmit a DMRS. The network device notifies, by sending signaling to the first terminal device, the first terminal device of whether the OFDM symbol sharing manner can be used to transmit the DMRS.

Optionally, in another possible implementation of this application, the instruction information includes second information, and the second information is used to indicate a location of the target OFDM symbol in uplink data transmission resources of the N terminal devices.

A change of the location of the target OFDM symbol in the uplink data transmission resources of the N terminal devices may result in a change of data transmission performance of an entire communications system. The network device notifies, by sending the second information to the first terminal device, the first terminal device of the location of the target OFDM symbol in the uplink data transmission resources of the N terminal devices, so that the first terminal device quickly determines a symbol for sending the DMRS.

Optionally, the first information and the second information may be included in a same piece of information, or may be two pieces of independent information. This is not specifically limited in this application. If the first information and the second information are included in the same piece of information, overheads of the instruction information can be effectively reduced.

Optionally, in another possible implementation of this application, the instruction information includes third information, and the third information is used to indicate a value of N.

In actual application, the network device may adjust, based on a requirement, terminal devices sharing the target OFDM symbols. In this way, a quantity of the terminal devices sharing the target OFDM symbol may change. Therefore, the network device needs to send, to the first terminal device, the quantity N of the terminal devices sharing the target OFDM symbol. The network device adjusts the terminal devices sharing the target OFDM symbol, making resource scheduling more flexible.

Optionally, in another possible implementation of this application, the instruction information includes fourth information, and the fourth information is used to indicate an ordering position of the first terminal device in the N terminal devices.

The network device sends the fourth information to the first terminal device, so that the first terminal device can determine, based on the fourth information, a frequency domain location of an RE occupied by the first terminal device in a DMRS symbol, or an orthogonal DMRS sequence used by the terminal device.

Optionally, in another possible implementation of this application, the instruction information includes fifth information, where the fifth information is used to indicate a multiplexing manner of an uplink resource occupied by each terminal device in the target OFDM symbol, and the multiplexing manner is frequency division multiplexing FDM or code division multiplexing CDM.

The N terminal devices share the target OFDM symbol. The multiplexing manner of the uplink resource occupied by each terminal device in the target OFDM symbol may be FDM or CDM. The network device sends the fifth information to the first terminal device to clearly indicate a multiplexing manner of an uplink resource occupied by the first terminal device in the target OFDM symbol.

According to a seventh aspect, a terminal device is provided. The terminal device is a first terminal device, and the first terminal device includes a receiving unit, a processing unit, and a sending unit.

Specific functions implemented by various units or modules provided in this application are as follows:
The receiving unit is configured to receive scheduling information and instruction information that are sent by a network device, where the scheduling information is used to indicate an uplink data transmission resource of the first terminal device, the instruction information is used to instruct N terminal devices to share a target OFDM symbol, the first terminal device is one of the N terminal devices, the target OFDM symbol is used to transmit a demodulation reference signal DMRS of each of the N terminal devices, and N ≥ 2. The processing unit is configured to determine the uplink data transmission resource indicated by the scheduling information received by the receiving unit, and determine the target OFDM symbol indicated by the instruction information received by the receiving unit. The sending unit is configured to send uplink data on the uplink data transmission resource determined by the processing unit, and send a DMRS included in the uplink data on the target OFDM symbol determined by the processing unit.

Further, in a possible implementation of this application, the instruction information includes first information whose content is a first numeric value, the first information whose content is the first numeric value is used to instruct the first terminal device to use an OFDM symbol sharing manner to transmit the DMRS, and the first numeric value is a value in a preset numeric value set.

Further, in another possible implementation of this application, the instruction information includes second information, and the second information is used to indicate a location of the target OFDM symbol in uplink data transmission resources of the N terminal devices.

Further, in another possible implementation of this application, the instruction information includes third information, and the third information is used to indicate a value of N.

Further, in another possible implementation of this application, the instruction information includes fourth information, and the fourth information is used to indicate an ordering position of the first terminal device in the N terminal devices.

Further, in another possible implementation of this application, the instruction information includes fifth information, where the fifth information is used to indicate a multiplexing manner of an uplink resource occupied by each terminal device in the target OFDM symbol, and the multiplexing manner is frequency division multiplexing FDM or code division multiplexing CDM.

According to an eighth aspect, a terminal device is provided. The terminal device is the foregoing first terminal device, and the terminal device includes one or more processors, a memory, and a communications interface. The memory, the communications interface, and the one or more processors are connected by using a system bus. The terminal device communicates with another device by using the communications interface. The memory is configured to store computer program code. The computer program code includes an instruction. When the one or more processors execute the instruction stored in the memory, the terminal device performs the data transmission method in any one of the sixth aspect or the possible implementations of the sixth aspect.

Specifically, the communications interface is configured to receive scheduling information and instruction information that are sent by a network device, where the scheduling information is used to indicate an uplink data transmission resource of the first terminal device, the instruction information is used to instruct N terminal devices to share a target OFDM symbol, the first terminal device is one of the N terminal devices, the target OFDM symbol is used to transmit a demodulation reference signal DMRS of each of the N terminal devices, and N ≥ 2. The processor is configured to determine the uplink data transmission resource indicated by the scheduling information received by the communications interface, and determine the target OFDM symbol indicated by the instruction information received by the communications interface. The communications interface is further configured to send uplink data on the uplink data transmission resource determined by the processor, and send a DMRS included in the uplink data on the target OFDM symbol determined by the processor.

Further, in a possible implementation of this application, the instruction information includes first information whose content is a first numeric value, the first information whose content is the first numeric value is used to instruct the first terminal device to use an OFDM symbol sharing manner to transmit the DMRS, and the first numeric value is a value in a preset numeric value set.

Further, in another possible implementation of this application, the instruction information includes second information, and the second information is used to indicate a location of the target OFDM symbol in uplink data transmission resources of the N terminal devices.

Further, in another possible implementation of this application, the instruction information includes third information, and the third information is used to indicate a value of N.

Further, in another possible implementation of this application, the instruction information includes fourth information, and the fourth information is used to indicate an ordering position of the first terminal device in the N terminal devices.

Further, in another possible implementation of this application, the instruction information includes fifth information, where the fifth information is used to indicate a multiplexing manner of an uplink resource occupied by each terminal device in the target OFDM symbol, and the multiplexing manner is frequency division multiplexing FDM or code division multiplexing CDM.

According to a ninth aspect, a computer storage medium is provided. The computer storage medium stores computer program code. When the processor of the terminal device in the eighth aspect executes the computer program code, the terminal device performs the data transmission method in any one of the sixth aspect or the possible implementations of the sixth aspect.

According to a tenth aspect, a computer program product including an instruction is further provided. When the computer program product runs on a terminal device, the terminal device performs the data transmission method in any one of the sixth aspect or the possible implementations of the sixth aspect.

In this application, a name of the terminal device does not limit a device or a functional module. In actual implementation, these devices or functional modules may be given other names. Each device or functional module falls within the scope of protection defined by the following claims or their equivalents provided that a function of the device or functional module is similar to that in this application.

For specific descriptions of the seventh aspect, the eighth aspect, the ninth aspect, the tenth aspect, and various implementations thereof, refer to the detailed descriptions in the sixth aspect and the implementations of the sixth aspect. In addition, for beneficial effects of the seventh aspect, the eighth aspect, the ninth aspect, the tenth aspect, and various implementations thereof, refer to analysis of the beneficial effects in the sixth aspect and the implementations of the sixth aspect. Details are not described herein again.

These aspects or other aspects in the embodiments of this application are clearer and easier to understand in the following descriptions.

### BRIEF DESCRIPTION OF DRAWINGS

FIG. 1 is a schematic structural diagram of a resource block pair in the prior art;
FIG. 2 is a schematic structural diagram of an OFDM symbol occupied by a DMRS in each slot in the prior art;
FIG. 3 is a schematic structural diagram of uplink resource distribution in the prior art;
FIG. 4 is a schematic structural diagram of a communications system according to an embodiment of this application;
FIG. 5 is a schematic structural diagram of hardware of a smartphone according to an embodiment of this application;
FIG. 6 is a schematic structural diagram of hardware of a base station according to an embodiment of this application;
FIG. 7 is a first schematic structural diagram of sharing one DMRS symbol by N terminal devices according to an embodiment of this application;
FIG. 8 is a second schematic structural diagram of sharing one DMRS symbol by N terminal devices according to an embodiment of this application;
FIG. 9 is a third schematic structural diagram of sharing one DMRS symbol by N terminal devices according to an embodiment of this application;
FIG. 10 is a schematic flowchart of a data transmission method according to an embodiment of this application;
FIG. 11 is a fourth schematic structural diagram of sharing one DMRS symbol by N terminal devices according to an embodiment of this application;
FIG. 12 is a fifth schematic structural diagram of sharing one DMRS symbol by N terminal devices according to an embodiment of this application;
FIG. 13 is a sixth schematic structural diagram of sharing one DMRS symbol by N terminal devices according to an embodiment of this application;
FIG. 14 is a seventh schematic structural diagram of sharing one DMRS symbol by N terminal devices according to an embodiment of this application;
FIG. 15 is an eighth schematic structural diagram of sharing one DMRS symbol by N terminal devices according to an embodiment of this application;
FIG. 16 is a ninth schematic structural diagram of sharing one DMRS symbol by N terminal devices according to an embodiment of this application;
FIG. 17 is a tenth schematic structural diagram of sharing one DMRS symbol by N terminal devices according to an embodiment of this application;
FIG. 18 is a first schematic structural diagram of a network device according to an embodiment of this application;
FIG. 19 is a second schematic structural diagram of a network device according to an embodiment of this application;
FIG. 20 is a third schematic structural diagram of a network device according to an embodiment of this application; and
FIG. 21 is a schematic structural diagram of a terminal device according to an embodiment of this application.

### DESCRIPTION OF EMBODIMENTS

In the specification, claims, and accompanying drawings of this application, the terms "first", "second", "third" and so on are intended to distinguish between different objects but do not limit a particular order.

In addition, in the embodiments of this application, the word "exemplary" or "for example" is used to represent giving an example, an illustration, or a description. Any embodiment or design scheme described as an "exemplary" or "for example" in the embodiments of this application should not be explained as being more preferred or having more advantages than another embodiment or design scheme. Exactly, use of the word "exemplary" or "example" or the like is intended to present a relative concept in a specific manner.

In a conventional cellular communications system, for example, a long term evolution (Long Term Evolution, LTE) system, a resource block pair (Resource Block pair, RB pair) is a basic unit of resource scheduling. Each RB pair is equal to a length of one subframe in time domain, and includes 12 subcarriers in frequency domain, with a spacing of 15 kilohertz (kHz) between adjacent subcarriers. Each subframe includes two slots (slot). A quantity of OFDM symbols included in each subframe varies with a length of a cyclic prefix (Cyclic Prefix, CP). When the CP is a normal cyclic prefix (Normal Cyclic Prefix, NCP), each slot includes seven OFDM symbols. When the CP is an extended cyclic prefix (Extended Cyclic Prefix, ECP), each slot includes six OFDM symbols.

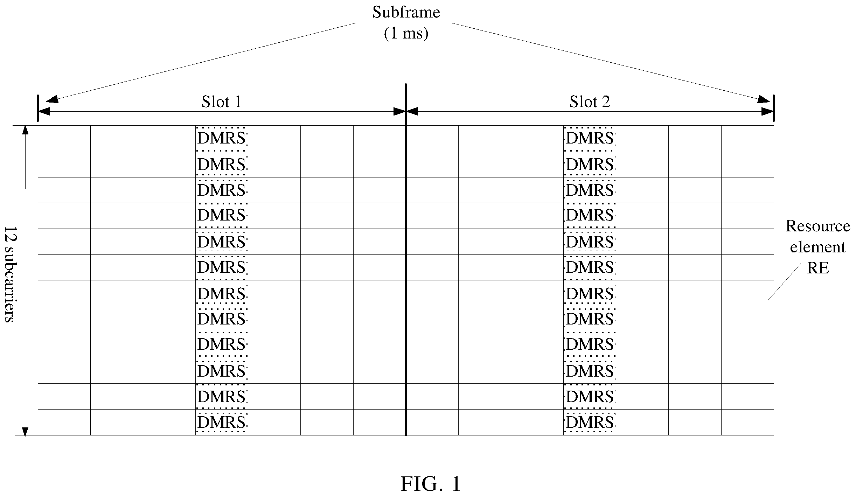

FIG. 1 is a schematic structural diagram of an RB pair when an NCP is used. As shown in FIG. 1, each rectangular box in FIG. 1 indicates one RE, that is, a time-frequency resource defined as one OFDM symbol in time domain and one subcarrier in frequency domain. The RB pair shown in FIG. 1 includes two slots in time domain: a slot 1 and a slot 2. To be specific, the RB pair shown in FIG. 1 is equal to a length of one subframe in time domain, namely, 1 millisecond (ms). In frequency domain, the RB pair includes 12 subcarriers, and a spacing between adjacent subcarriers is 15 kHz. Actually, the LTE system supports only the subcarrier spacing of 15 kHz.

When sending uplink (Uplink, UL) data, user equipment (User Equipment, UE) needs to send an uplink DMRS, so that a base station performs channel estimation on an uplink channel of the UE based on the uplink DMRS to correctly obtain the UL data. A physical channel corresponding to the UL data may be a physical uplink shared channel (Physical Uplink Shared Channel, PUSCH), or may be a physical uplink control channel (Physical Uplink Control Channel, PUCCH). In different physical channels, quantities and locations of OFDM symbols occupied by the uplink DMRS are different.

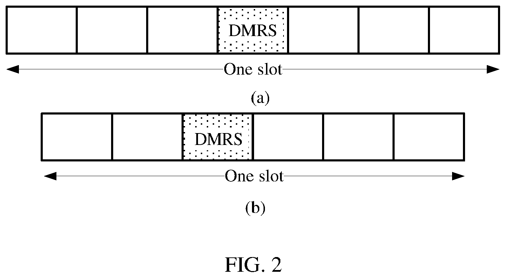

FIG. 2 shows a location of an OFDM symbol occupied by an uplink DMRS in each slot for a PUSCH. As shown in FIG. 2(a), in a PUSCH for which an NCP is used, a slot includes seven OFDM symbols, and the uplink DMRS occupies the fourth OFDM symbol from the end of the slot. As shown in FIG. 2(b), in a PUSCH for which an ECP is used, a slot includes six OFDM symbols, and the uplink DMRS occupies the fourth OFDM symbol from the end of the slot. In other words, in the PUSCH, the uplink DMRS always occupies the fourth OFDM symbol from the end of each slot.

For a PUCCH, in each slot, a quantity and locations of OFDM symbols occupied by the uplink DMRS are related to both a CP type and a PUCCH format. Currently, for the PUCCH, the quantity and the locations of OFDM symbols occupied by the uplink DMRS in each slot are shown in Table 1. When the NCP is used, a value of an OFDM location index in each slot is 0 to 6. When the ECP is used, a value of an OFDM number in each slot is 0 to 5. For PUCCH formats "1, 1a, 1b, 2, 3, 2a, and 2b" shown in Table 1, refer to definitions of PUCCH formats in an existing protocol. The sign "-" in Table 1 indicates that such a case does not exist.

**Table 1**

| PUCCH format | Location index of a DMRS symbol | |
|---|---|---|
| | NCP | ECP |
| 1, 1a, 1b | 2, 3, 4 | 2, 3 |
| 2, 3 | 1, 5 | 3 |
| 2a, 2b | 1, 5 | - |

Whether in the PUSCH or the PUCCH, and whether the NCP or the ECP used, in frequency domain, an OFDM symbol occupied by an uplink DMRS of UE occupies entire bandwidth allocated to the UE, to be specific, all subcarriers included in the bandwidth allocated to the UE. The OFDM symbol occupied by the uplink DMRS is referred to as a DMRS symbol for short. Unless otherwise specified, all symbols in this application are OFDM symbols. As shown in FIG. 1, for a PUSCH for which the NCP is used and whose allocated bandwidth is one RB pair, a DMRS occupies all REs of a DMRS symbol in frequency domain.

In the conventional cellular communications system, DMRS symbols account for a relatively small proportion in OFDM symbols included in one subframe. For example, for the PUSCH for which the NCP is used in FIG. 1, a proportion of DMRS symbols in OFDM symbols included in one subframe is 2/14 = 14.3%.

With development of communications technologies, a 5G network is proposed. In 5G NR, a mini-slot is introduced as a basic unit of resource scheduling. Each mini-slot may include a few OFDM symbols. For example, one mini-slot may include a minimum of only two (or even one) OFDM symbols. In this way, a 1 ms subframe may include a plurality of mini-slots, and each mini-slot is allocated to different UEs. To be specific, resources of a plurality of UEs in each subframe are distributed in a TDM manner. As stipulated in 5G NR, each mini-slot includes at least one front-loaded DMRS symbol, and the front-loaded DMRS symbol is located in the first symbol of the mini-slot.

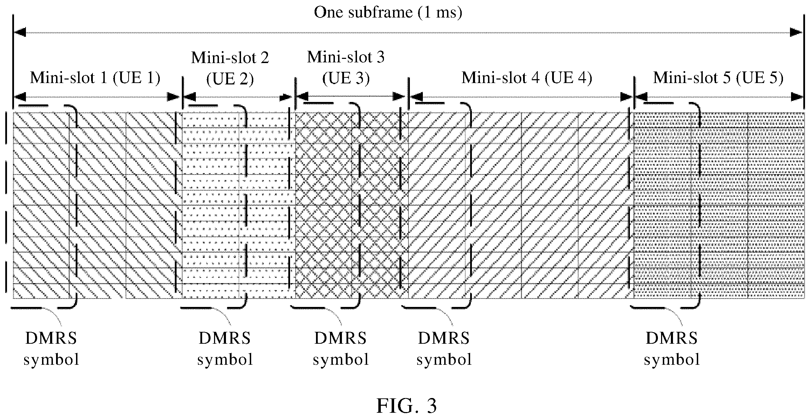

For example, as shown in FIG. 3, when a subcarrier spacing is 15 kHz and an NCP is used, 14 OFDM symbols of one subframe are divided into five mini-slots: a mini-slot 1, a mini-slot 2, a mini-slot 3, a mini-slot 4, and a mini-slot 5. The five mini-slots are respectively corresponding to UE 1, UE 2, UE 3, UE 4, and UE 5. Each mini-slot includes one DMRS symbol, and each DMRS symbol is located in the first symbol of a corresponding mini-slot. Each rectangular box in FIG. 3 represents one RE. Rectangular boxes with different shadings represent time-frequency resources allocated to different UEs. A rectangular box included in a dotted box represents a DMRS RE, and a rectangular box other than the rectangular box included in the dotted box represents a data RE. The definition applies to all rectangular boxes in subsequent figures, and details are not described again.

As shown in FIG. 3, a proportion of DMRS symbols in OFDM symbols included in one subframe is 5/14 = 35.7%. Obviously, compared with the conventional cellular communications system, in 5G NR, mini-slot-based resource allocation may cause a proportion of DMRS symbols in OFDM symbols included in one subframe to increase sharply, resulting in a great waste of resources. If the mini-slot includes an additional DMRS symbol in addition to the front-loaded DMRS symbol, the DMRS symbols account for a larger proportion in the OFDM symbols included in the entire subframe, intensifying a waste of resources.

In addition, it is further stipulated in 5G NR that the subcarrier spacing may be 15 kHz × 2n, where n is an integer. Therefore, in 5G NR, one subframe may include more OFDM symbols, for example, 28 or 56 symbols. So many OFDM symbols may be divided into more mini-slots, and each mini-slot includes at least one DMRS symbol. Therefore, a larger quantity of mini-slots leads to a higher proportion of resources occupied by DMRS symbols. In other words, introduction of a larger subcarrier spacing may cause larger transmission overheads of the DMRS symbols.

With respect to the foregoing problem of resource waste, the embodiments of this application provide a data transmission method and a device. N (N ≥ 2) terminal devices transmit uplink data in a TDM manner, the N terminal devices share a target OFDM symbol, and the target OFDM symbol is used to transmit a DMRS of each terminal device. To be specific, the N terminal devices share one DMRS symbol, instead of each occupying one OFDM symbol for DMRS transmission. This effectively decreases a proportion of DMRS symbols and improves resource utilization.

The target OFDM symbol in the embodiments of this application is a DMRS symbol shared by the N terminal devices.

The data transmission method provided in the embodiments of this application is applicable to a communications system. The communications system may be a mobile communications system, or may be another OFDM-based system, for example, a wireless local area network (Wireless Local Area Network, WLAN) system.

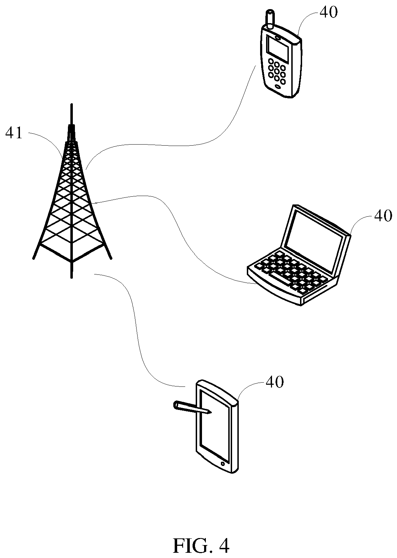

FIG. 4 is a schematic structural diagram of a communications system according to an embodiment of this application. Referring to FIG. 4, the communications system includes a plurality of terminal devices 40 and a network device 41. Each terminal device 40 is connected to the network device 41, and the network device 41 performs data transmission with each terminal device 40. In actual application, a connection between each terminal device 40 and the network device 41 is a wireless connection. To present a connection relationship between devices easily and visually, solid lines are used in FIG. 4.

The terminal device 40 in this embodiment of this application is a wireless terminal capable of receiving scheduling information and instruction information of the network device. The wireless terminal may be a device that provides a user with voice and/or data connectivity, a handheld device with a wireless connection function, or another processing device connected to a wireless modem.

The wireless terminal may communicate with one or more core networks through a radio access network (for example, RAN, English: Radio Access Network). The wireless terminal may be a mobile terminal, for example, a mobile phone (or referred to as a "cellular" phone) or a computer having a mobile terminal. Alternatively, the wireless terminal may be a portable, pocket-sized, handheld, computer built-in, or vehicle-mounted mobile apparatus, which exchanges voice and/or data with the radio access network, for example, a mobile phone, a tablet computer, a notebook computer, a netbook, or a personal digital assistant (Personal Digital Assistant, PDA).

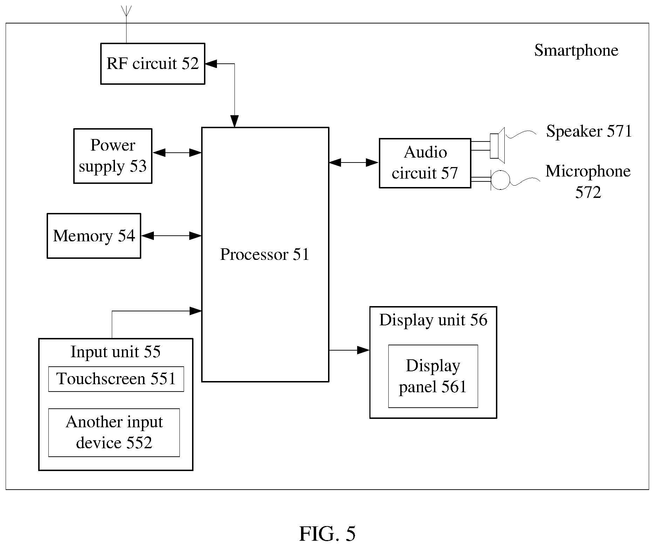

For example, in this embodiment of this application, the terminal device shown in FIG. 4 may be a smartphone. The following specifically describes each component of the smartphone with reference to FIG. 5.

As shown in FIG. 5, the smartphone includes a processor 51, a radio frequency (English: Radio Frequency, RF) circuit 52, a power supply 53, a memory 54, an input unit 55, a display unit 56, an audio circuit 57, and the like.

A person skilled in the art may understand that a structure of the smartphone shown in FIG. 5 does not constitute a limitation on the smartphone, and the smartphone may include more or fewer components than those shown in FIG. 5, a combination of some of the components shown in FIG. 5, or components disposed differently from the components shown in FIG. 5.

The processor 51 is a control center of the smartphone, connects to all components of the entire smartphone by using various interfaces and lines, and runs or executes a software program and/or module stored in the memory 54 and invokes data stored in the memory 54, to perform functions of the smartphone and process data, so as to perform overall monitoring on the smartphone. Optionally, the processor 21 may include one or more processing units. Preferably, the processor 21 may integrate an application processor and a modem processor. The application processor primarily processes an operating system, a user interface, an application program, and the like, and the modem processor primarily processes wireless communication. Optionally, the application processor and the modem processor may be disposed separately, or may be integrated in a same device.

The RF circuit 52 may be configured to receive and transmit information, or receive and send signals in a call process. In particular, the RF circuit 52 receives downlink information of a base station and then provides the received downlink information to the processor 51 for processing, and sends uplink data to the base station. Usually, the RF circuit includes but is not limited to an antenna, at least one amplifier, a transceiver, a coupler, a low noise amplifier (Low Noise Amplifier, LNA), a duplexer, and the like. In addition, the RF circuit 52 may further communicate with a network and another device through wireless communication. Any communication standard or protocol may be used for the wireless communication, including but not limited to a global system for mobile communications (Global System of Mobile communication, GSM), a general packet radio service (General Packet Radio Service, GPRS), code division multiple access (Code Division Multiple Access, CDMA), wideband code division multiple access (Wideband Code Division Multiple Access, WCDMA), LTE, an email, a short message service (Short Messaging Service, SMS), and the like.

The smartphone includes the power supply 53 (for example, a battery) for supplying power to each component. Optionally, the power supply may be logically connected to the processor 51 by using a power management system, so that the power management system implements functions such as charge management, discharge management, and power consumption management.

The memory 54 may be configured to store the software program and the module. The processor 51 runs the software program and the module that are stored in the memory 54, to perform function applications of the smartphone and process data.

The memory 54 may mainly include a program storage area and a data storage area. The program storage area may store an operating system, an application program required by at least one function (for example, a mail receiving function), and the like. The data storage area may store data (for example, audio data and a phone book) created based on use of the smartphone, and the like. In addition, the memory 54 may include a high-speed random access memory, and may further include a nonvolatile memory, for example, at least one disk storage device, a flash memory device, or another volatile solid-state storage device.

The input unit 55 may be configured to receive entered numeral or character information, and generate key signal input related to user setting and function control of the smartphone. Specifically, the input unit 55 may include a touchscreen 551 and another input device 552.

The touchscreen 551, also referred to as a touch panel, may collect a touch operation of a user on or near the touchscreen 551 (such as an operation performed by the user on or near the touchscreen 551 by using a finger or any proper object or accessory such as a stylus), and drive a corresponding connection apparatus according to a preset program. Optionally, the touchscreen 551 may include two parts: a touch detection apparatus and a touch controller. The touch detection apparatus detects a touch orientation of the user, detects a signal brought by the touch operation, and sends the signal to the touch controller. The touch controller receives touch information from the touch detection apparatus, converts the touch information into touch point coordinates, and sends the touch point coordinates to the processor 51, and can receive and execute a command sent by the processor 51. In addition, the touchscreen 551 may be implemented in various types, such as a resistive type, a capacitive type, an infrared type, and a surface acoustic wave type.

The display unit 56 may be configured to display information entered by the user or information provided for the user, and various menus of the smartphone. The display unit 56 may include a display panel 561. Optionally, the display panel 561 may be configured by using a liquid crystal display (Liquid Crystal Display, LCD), an organic light-emitting diode (Organic Light-emitting Diode, OLED), or a like form.

Further, the touchscreen 551 may cover the display panel 561. When detecting a touch operation on or near the touchscreen 551, the touchscreen 551 transfers information about the touch operation to the processor 51 to determine a type of a touch event. Then the processor 51 provides corresponding visual output on the display panel 561 based on the type of the touch event. Although the touchscreen 551 and the display panel 561 are used as two separate components to implement input and output functions of the smartphone in FIG. 5, in some embodiments, the touchscreen 551 and the display panel 561 may be integrated to implement the input and output functions of the smartphone.

The audio circuit 57, a speaker 571, and a microphone 572 are configured to provide an audio interface between the user and the smartphone. The audio circuit 57 may transmit, to the speaker 571, an electrical signal converted from received audio data, and the speaker 571 converts the electrical signal into a sound signal for output. In addition, the microphone 572 converts a collected sound signal into an electrical signal, and the audio circuit 57 receives the electrical signal, converts the electrical signal into audio data, and then outputs the audio data to the RF circuit 52, to send the audio data to, for example, another smartphone, or outputs the audio data to the memory 54 for further processing.

Optionally, the smartphone may further include various sensors (for example, a gyro sensor, a hygrometer sensor, an infrared sensor, or a magnetometer sensor), a Wi-Fi module, a Bluetooth module, a housing, and the like, which are not shown in FIG. 5.

The network device 41 in this embodiment of this application allocates a transmission resource to each terminal device 40. The network device 41 is a device having a central control function, for example, a base station, a hotspot (pico), a transmission point (TP), a relay (relay), or an access point (Access Point, AP).

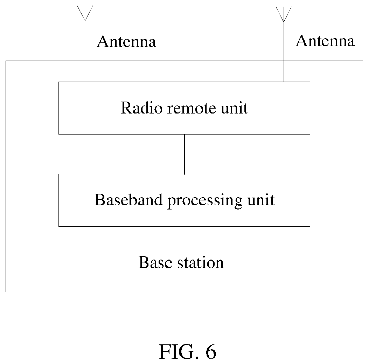

For example, in this embodiment of this application, the network device 41 shown in FIG. 4 may be a base station. The following specifically describes each component of the base station with reference to FIG. 6.

As shown in FIG. 6, the base station includes a baseband processing unit (Base Band Unit, BBU), a radio remote unit (Radio Remote Unit, RRU), and an antenna. The BBU and the RRU may be connected by using an optical fiber. The RRU is then connected to the antenna by using a coaxial cable and a power splitter (coupler). Usually, one BBU may be connected to a plurality of RRUs.

The RRU may include four modules: a digital intermediate frequency module, a transceiver module, a power amplification module, and a filter module. The digital intermediate frequency module is configured for modulation and demodulation, digital up-/down-conversion, digital-to-analog conversion, and the like of optical transmission. The transceiver module converts an intermediate frequency signal into a radio frequency signal, and the radio frequency signal is transmitted through the antenna after the radio frequency signal is amplified by the power amplification module and filtered by the filter module.

The BBU is configured to complete base band processing functions (for example, coding, multiplexing, modulation, and spreading) over a Uu interface (namely, an interface between the terminal device and the base station), an interface function, a signaling processing function, and local and remote operation and maintenance functions of a logical interface between a radio network controller (Radio Network Controller, RNC) and the base station, working status monitoring and alarm information reporting functions of a base station system, and the like.

It should be noted that in this embodiment of this application, in device to device (Device to Device, D2D) communication, for example, in hand ring-mobile phone-base station communication, for a link between a hand ring and a mobile phone, the hand ring may be regarded as the terminal device in this embodiment of this application, and the mobile phone may be regarded as the network device in this embodiment of this application.

It can be learned from the foregoing descriptions that the N terminal devices in this application share the target OFDM symbol and the target OFDM symbol is used to transmit the DMRS of each terminal device. Therefore, the target OFDM symbol in this application may be regarded as the DMRS symbol shared by the N terminal devices.

Specifically, the N terminal devices in this application share one DMRS symbol in the following two manners:

### (1) Sharing a DMRS symbol in an FDM manner

The N terminal devices share one DMRS symbol. In the shared DMRS symbol, different terminal devices occupy different REs.

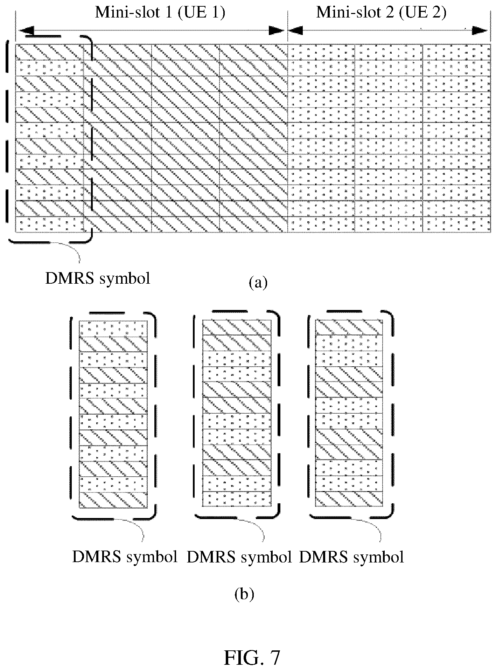

For example, as shown in FIG. 7(a), UE 1 and UE 2 transmit uplink data in the TDM manner, the UE 1 and the UE 2 share the first OFDM symbol of a mini-slot 1 and transmit a DMRS in the first OFDM symbol in the FDM manner, and the first OFDM symbol is a DMRS symbol. In the shared DMRS symbol, a DMRS RE of the UE 1 and a DMRS RE of the UE 2 are cross-distributed in the FDM manner.

Optionally, in the shared DMRS symbol, a specific frequency division multiplexing pattern (pattern) of the DMRS RE of the UE 1 and the DMRS RE of the UE 2 may alternatively be any pattern other than the pattern shown in FIG. 7(a). For ease of understanding, FIG. 7(b) shows a specific example of another pattern. FIG. 7(b) is similar to FIG. 7(a). Herein, FIG. 7(b) is no longer described in detail.

A specific FDM sharing pattern used for DMRS REs of different terminal devices may be predefined in a standard, or may be indicated by the network device in scheduling signaling. For example, the network device semi-statically configures an FDM sharing pattern of DMRS REs of terminal devices by using radio resource control (Radio Resource Control, RRC) signaling or other higher layer signaling.

Alternatively, the network device dynamically indicates an FDM sharing pattern of DMRS REs of terminal devices by using physical layer signaling such as downlink control information (Downlink Control Information, DCI) or group common DCI (group common DCI).

It should be noted that the shared DMRS symbol may be regarded as a symbol of a mini-slot of a terminal device, or may be regarded as a dedicated symbol independent of a mini-slot. Both are essentially the same. In this embodiment of this application, description is provided by regarding the shared DMRS symbol as a symbol of a mini-slot of a terminal device. For example, in FIG. 7(a), the shared DMRS symbol is regarded as the first symbol of the mini-slot 1 corresponding to the terminal device 1.

For any terminal device using the shared DMRS symbol to transmit a DMRS, the network device first estimates, based on DMRS REs occupied by the terminal device in the DMRS symbol, channel quality of subcarriers corresponding to these REs; and then the network device estimates, by using a difference method and/or an extrapolation method, channel quality of a subcarrier corresponding to another RE (namely, an RE occupied by other UE in the shared DMRS symbol) of the terminal device. In this way, the network device can obtain channel quality information of all subcarriers in transmission bandwidth of the terminal device, and further receive and demodulate uplink data sent by the terminal device.

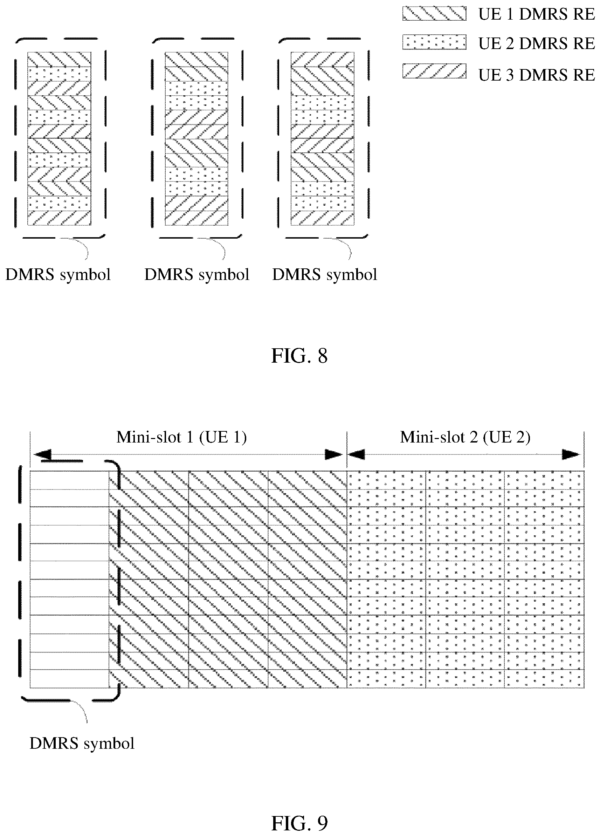

It can be easily understood that FIG. 7 is described only by using an example in which two UEs share one DMRS symbol. When three or more UEs share one DMRS symbol, similar processing may be performed. For example, when three UEs (UE 1, UE 2, and UE 3) share one DMRS symbol in the FDM manner, three distribution modes of DMRS REs of the different UEs in the DMRS symbol are shown in FIG. 8.

### (2) Sharing a DMRS symbol in a CDM manner

The N terminal devices share one DMRS symbol. In the shared DMRS symbol, the N terminal devices use mutually orthogonal DMRS sequences.

For example, as shown in FIG. 9, UE 1 and UE 2 transmit uplink data in the TDM manner, and the UE 1 and the UE 2 share the first OFDM symbol of a mini-slot 1 and transmit a DMRS in the first OFDM symbol in the CDM manner. The UE 1 and the UE 2 each use all REs to transmit the DMRS in the shared DMRS symbol, but a DMRS sequence transmitted by the UE 1 is orthogonal to that transmitted by the UE 2.

In a scenario in which the N terminal devices use the mutually orthogonal DMRS sequences, a method for generating orthogonal DMRS sequences may be: designing, by the network device, a plurality of orthogonal DMRS sequences, and allocating the plurality of orthogonal DMRS sequences to different terminal devices; or applying, by the network device, different cyclic shifts (Cyclic shift) and/or orthogonal cover codes (Orthogonal Cover Code, OCC) to a same base sequence to generate a plurality of orthogonal DMRS sequences, and allocating the plurality of generated orthogonal DMRS sequences to different terminal devices.

No matter whether terminal devices share a DMRS symbol in the FDM manner or in the CDM manner, power for transmitting DMRSs of different terminal devices to a same network device may be different. This may increase a peak to average power ratio (Peak to Average Power Ratio, PAPR) of the DMRS symbol, affecting channel estimation performance of the network device.

For example, UE 1 is far away from a base station and UE 2 is close to the base station. If a modulation and coding scheme (Modulation and Coding Scheme, MCS) used by the UE 2 to transmit data is higher than an MCS used by the UE 1 to transmit data, power at which the data transmitted by the UE 2 arrives at the base station is necessarily higher than power at which the data transmitted by the UE 1 arrives at the base station. Therefore, no matter whether the UE 1 and the UE 2 share a DMRS symbol in the FDM manner or in the CDM manner, a difference between the power when the data transmitted by the UE 1 arrives at the base station and the power when the data transmitted by the UE 2 arrives at the base station causes a PAPR of the DMRS symbol to increase, reducing channel estimation accuracy of the base station.

To avoid the foregoing problem, the network device in this application may schedule two or more terminal devices with equivalent power of arrival into a group to share a DMRS symbol, to decrease a PAPR of the DMRS symbol. This process may be referred to as terminal device grouping or terminal device pairing. Terminal devices in a same group have approximate power of arrival, and can share one DMRS symbol. In this application, how to group a plurality of terminal devices may be implemented inside the network device. The network device may send scheduling signaling to instruct the N terminal devices to share one DMRS symbol. The N terminal devices are a result of terminal device grouping performed inside the network device. For a process of instructing, by the network device, the N terminal devices to share one DMRS symbol, refer to descriptions in the following embodiments of this application.

The following describes in detail the data transmission method provided in this application. It should be noted that in the following embodiments of this application, the solutions of this application are all described by using mini-slot-based scheduling as an example. Certainly, the data transmission method provided in this application is also applicable to scheduling based on another granularity such as subframe-based scheduling, slot-based scheduling, or symbol-based scheduling.

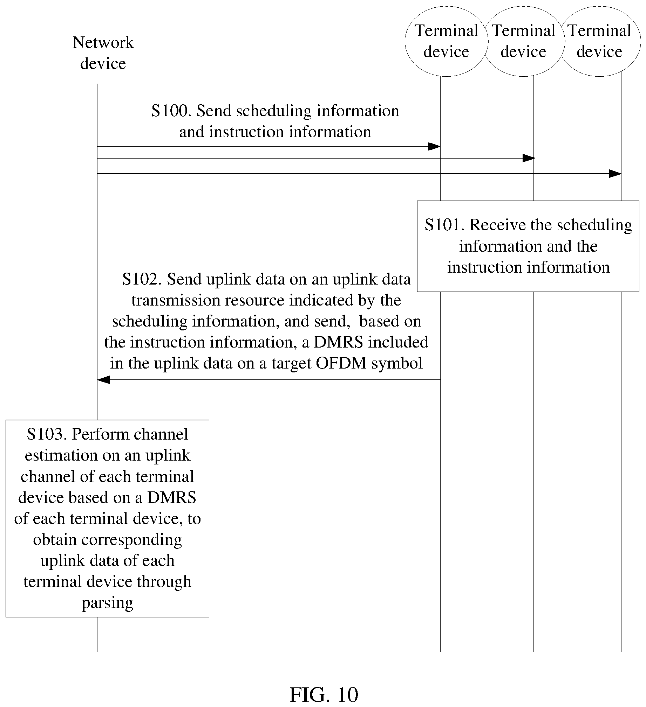

FIG. 10 is a schematic flowchart of a data transmission method according to an embodiment of this application. The data transmission method may be applied to the communications system shown in FIG. 4.

Referring to FIG. 10, the data transmission method includes the following steps S100 to S103.

S100. A network device sends scheduling information and instruction information to each of N terminal devices.

The scheduling information in this embodiment of this application is used to indicate an uplink data transmission resource of each terminal device. Specifically, the network device sends the scheduling information to each of the N terminal devices, to schedule each terminal device to transmit uplink data in a corresponding mini-slot.

Optionally, the network device may add the scheduling information to DCI or group common DCI, or add the scheduling information to higher layer signaling such as RRC signaling.

If the network device adds the scheduling information to the DCI, the network device notifies each terminal device separately. If the network device adds the scheduling information to the group common DCI, the network device notifies all terminal devices in a broadcast or multicast manner.

The instruction information in this embodiment of this application is used to instruct the N terminal devices to share a target OFDM symbol. The target OFDM symbol in this embodiment of this application is a DMRS symbol shared by the N terminal devices.

Specifically, the instruction information includes first information whose content is a first numeric value, and the first information whose content is the first numeric value is used to instruct each terminal device to use an OFDM symbol sharing manner to transmit a DMRS. The first numeric value is a value in a preset numeric value set.

In actual application, not every terminal device can share one DMRS symbol with another terminal device. For example, when a frequency domain characteristic of a channel of a terminal device is totally not flat, it is not suitable for the terminal device to share one DMRS symbol with another terminal device in an FDM manner. Even for a same terminal device, the terminal device may not be capable of sharing one DMRS symbol with another terminal device at any time. A channel characteristic of a terminal device is time-varying. Therefore, in some time segments, a frequency domain characteristic of a channel of the terminal device is relatively flat, and the terminal device can share one DMRS symbol with another terminal device. However, in some other time segments, the frequency domain characteristic of the channel of the terminal device is not flat, and the terminal device cannot share one DMRS symbol with another terminal device.

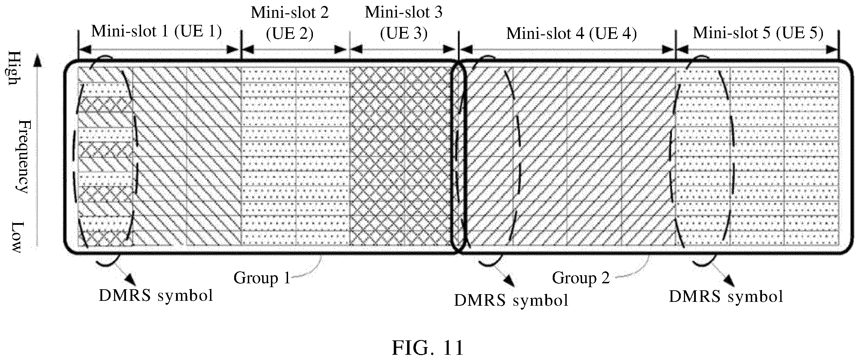

For example, the network device pre-configures mini-slot division in each subframe by using RRC signaling or other higher layer signaling, and further configures a mini-slot group. Only UEs corresponding to mini-slots in a same group can share one DMRS, and UEs corresponding to mini-slots in different groups cannot share one DMRS. As shown in FIG. 11, a subframe shown in FIG. 11 is divided into five mini-slots: a mini-slot 1, a mini-slot 2, a mini-slot 3, a mini-slot 4, and a mini-slot 5, where the mini-slot 1, the mini-slot 2, and the mini-slot 3 are added to a group, and the mini-slot 4 and the mini-slot 5 are added to another group.

In the foregoing case, the network device configures the mini-slot group by using signaling, for example, higher layer signaling such as RRC signaling, or physical layer signaling. Certainly, mini-slot group division may be predefined in a standard. For example, every two adjacent mini-slots of all mini-slots of a same subframe are added to a group. If the subframe includes an odd quantity of mini-slots, a terminal device corresponding to the remaining one mini-slot does not share a DMRS symbol with another terminal device or is added to another group according to a predefined rule. For example, the last three mini-slots of a same subframe are added to a group, or the first three mini-slots of a same subframe are added to a group. For another example, all mini-slots of a same subframe are always added to a group. In this case, a base station does not need to configure a mini-slot group by using explicit signaling.

It should be noted that mini-slot grouping is equivalent to the above-mentioned terminal device grouping, and they have a same meaning but are described from different perspectives. In this application, the mini-slot grouping is used for description in the following.

In the foregoing example, the base station may determine, based on a situation, whether terminal devices corresponding to each mini-slot group share one DMRS symbol, and transmit the first information by using signaling, to indicate whether the terminal devices perform uplink transmission in these mini-slots in a DMRS sharing manner.

For example, in the example of sharing a DMRS symbol in the FDM manner in FIG. 11, a subframe is divided into five mini-slots that are respectively corresponding to UE 1 to UE 5. Further, these mini-slots are divided into two mini-slot groups, where the mini-slot 1, the mini-slot 2, and the mini-slot 3 belong to a group 1, and the mini-slot 4 and the mini-slot 5 belong to a group 2. It is assumed that a channel of the UE 5 fluctuates greatly in frequency domain. Then, it is not suitable for UEs in the group 2 to share one DMRS symbol with other UEs, that is, each mini-slot in the group 2 has its unique DMRS symbol; and the three mini-slots in the group 1 share one DMRS symbol in the FDM manner.

In this case, the network device adds the first information to signaling, to instruct a terminal device whether to use the OFDM symbol sharing manner to transmit a DMRS.

Specifically, the network device in this embodiment of this application may send the first information in the following several manners.

In a first implementation, the first information may be carried in group common DCI. Because the group common DCI is sent to a plurality of terminal devices, the first information may be correctly received by the plurality of terminal devices.

For example, in FIG. 11, the network device sends a piece of group common DCI to all UEs in a current subframe, to instruct UEs (UE 1, UE 2, and UE 3) in a group 1 to use the OFDM symbol sharing manner to transmit a DMRS, and instruct UEs (UE 4 and UE 5) in a group 2 not to use the OFDM symbol sharing manner to transmit a DMRS. Alternatively, the network device sends two pieces of group common DCI. The first piece of group common DCI is specific to UEs in a group 1, and used to instruct the UEs in the group 1 to use the OFDM symbol sharing manner to transmit a DMRS, and the second piece of group common DCI is specific to UEs in a group 2, and used to instruct the UEs in the group 2 not to use the OFDM symbol sharing manner to transmit a DMRS.

In a second implementation, the first information may be carried in DCI. The DCI is specific to each terminal device, is carried in a PDCCH, and can be correctly received by only a target terminal device.

For example, in FIG. 11, DCI sent by the network device to UE i (i = 1, 2, 3) carries the first information, instructing the UE i to use the OFDM symbol sharing manner to transmit a DMRS; and DCI sent by the network device to UE j (j = 4, 5) carries the first information, instructing the UE j not to use the OFDM symbol sharing manner to transmit a DMRS.

In a third implementation, the first information may be carried in RRC signaling or in a MAC CE, that is, may be semi-statically configured by using higher layer signaling.

For example, the network device configures some terminal devices (for example, terminal devices moving at a high speed) not to use the OFDM symbol sharing manner to transmit a DMRS, but configures some other terminal devices to use the OFDM symbol sharing manner to transmit a DMRS. Alternatively, the network device configures terminal devices in some mini-slot groups to use the OFDM symbol sharing manner to transmit a DMRS, and configures terminal devices in some other mini-slot groups not to use the OFDM symbol sharing manner to transmit a DMRS.

The network device may modify the foregoing configuration information. In FIG. 11, sharing a DMRS symbol in the FDM manner may be alternatively replaced with sharing a DMRS symbol in a CDM manner. Details are not described herein.

In this embodiment of this application, when content of the first information is a first numeric value, a terminal device is instructed to use the OFDM symbol sharing manner to transmit a DMRS, and the first numeric value is a value in a preset numeric value set, for example, the preset numeric value set may be expressed as {1}. When content of the first information is a second numeric value, a terminal device is instructed not to use the OFDM symbol sharing manner to transmit a DMRS, and the second numeric value does not belong to a preset numeric value set. A length of the first information is one bit (bit) or a plurality of bits.

For example, the length of the first information is one bit, and the preset numeric value set is expressed as {1}. When the content of the first information is 1, the terminal device is instructed to use the OFDM symbol sharing manner to transmit the DMRS; when the content of the first information is 0, the terminal device is instructed not to use the OFDM symbol sharing manner to transmit the DMRS.

When a DMRS symbol is shared in the CDM manner, terminal devices corresponding to different mini-slots in a same mini-slot group need to use different DMRS sequences, and terminal devices corresponding to mini-slots in different mini-slot groups may use a same DMRS sequence or different DMRS sequences, where the different DMRS sequences are orthogonal. For example, UE 1, UE 2, and UE 3 in FIG. 11 need to use different DMRS sequences, and a terminal device (for example, the UE 1) in a group 1 and a terminal device (for example, UE 5) in a group 2 may use a same DMRS sequence.

Specifically, in this embodiment of this application, a DMRS sequence may be allocated in the following manners.

In a first implementation, the network device indicates a DMRS sequence identifier of each terminal device by using DCI, group common DCI, RRC, a MAC CE, or the like.

In a second implementation, the network device indicates an orthogonal cover code (Orthogonal Cover Code, OCC) and/or a cyclic shift of a DMRS sequence of each terminal device by using DCI, group common DCI, RRC, a MAC CE, or the like. In this way, a terminal device determines a DMRS sequence of the terminal device based on a predefined base sequence and an indication of the network device.

In a third implementation, a terminal device determines a corresponding DMRS sequence based on a location (namely, an ordering position) of a mini-sot allocated to the terminal device in a mini-slot group.

For example, in a mini-slot group, in time domain, a terminal device corresponding to the first mini-slot uses a DMRS sequence 1, a terminal device corresponding to the second mini-slot uses a DMRS sequence 2, ..., a terminal device corresponding to the m^{th} mini-slot uses a DMRS sequence m, and so on. DMRS sequences represented by different numbers are different.

Specifically, the instruction information in this embodiment of this application further includes fifth information. The fifth information is used to indicate a multiplexing manner of an uplink resource occupied by each terminal device in the target OFDM symbol, and the multiplexing manner is FDM or CDM.

To be specific, the fifth information is used to instruct terminal devices to share a DMRS symbol in the FDM manner or instruct terminal devices to share a DMRS symbol in the CDM manner.

Similarly, the network device may add the fifth information to higher layer signaling such as RRC signaling or a MAC CE, or may add the fifth information to physical layer signaling such as DCI or group common DCI.

Specifically, the instruction information in this embodiment of this application further includes second information, and the second information is used to indicate a location of the target OFDM symbol in uplink data transmission resources of the N terminal devices. To be specific, the second information is used to indicate a mini-slot to which the DMRS symbol shared by the N terminal devices belongs.

In the foregoing examples, the DMRS symbol shared by the N terminal devices is always located in the first symbol of the first mini-slot of a plurality of mini-slots participating in sharing. However, in some cases, the shared DMRS symbol configured in this way may not be the most proper one.

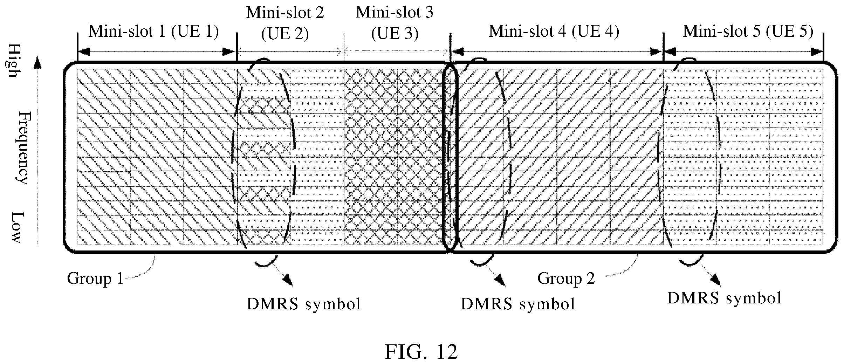

For example, in the example shown in FIG. 11, a DMRS symbol in a group 1 is located in the first symbol of a mini-slot 1. However, if UE 2 is a user moving at a high speed, a relatively long time (namely, the mini-slot 1) elapses from the DMRS symbol to uplink data of the UE 2. As a result, channel information estimated by the network device based on the DMRS symbol may expire, and consequently, a data transmission success rate of the UE 2 decreases sharply. In this case, a symbol in a mini-slot 2, for example, the first symbol in the mini-slot 2, may be configured as the shared DMRS symbol, as shown in FIG. 12. Certainly, the network device may alternatively schedule the UE 2 to the mini-slot 1 to achieve a same objective. If both the UE 2 and UE 3 are users moving at a high speed, the first symbol in a mini-slot 3 may be configured as the shared DMRS symbol. This is helpful for both the UE 2 and the UE 3.

Certainly, in this case, the network device may alternatively schedule the UE 2 and the UE 3 to the mini-slot 1 and the mini-slot 2 respectively, and configure the last symbol in the mini-slot 1 as the shared DMRS symbol. FDM DMRS sharing in FIG. 12 may also be replaced with CDM DMRS sharing. Details are not described.

Similar to the first information, the second information may be added by the network device to DCI or group common DCI, or may be added to signaling such as RRC signaling or a MAC CE.

Specifically, the network device in this embodiment of this application may send the second information in the following several manners.

In a first implementation, if the shared DMRS symbol is at a fixed location of a mini-slot, for example, is always located in the first OFDM symbol of the mini-slot, the second information needs to indicate only a mini-slot in which the shared DMRS symbol is located, that is, the second information indicates a mini-slot in which the target OFDM symbol is located.

In a second implementation, if the shared DMRS symbol is in a fixed mini-slot in a mini-slot group, for example, is always located in the first mini-slot in the mini-slot group, but a specific location of the shared DMRS symbol in the mini-slot is changeable, the second information needs to indicate an OFDM symbol in which the shared DMRS symbol is located in the mini-slot. For example, the second information indicates whether the shared DMRS symbol is located in the first symbol or the last symbol of the mini-slot.

In a third implementation, if both a mini-slot in which the shared DMRS symbol is located and a location of the shared DMRS symbol in the mini-slot are changeable, the second information needs to indicate not only the mini-slot in which the shared DMRS symbol is located, but also an OFDM symbol in which the shared DMRS symbol is located in the mini-slot.

Certainly, in this application, the first information and the second information may be mutually independent information; or may be included in one piece of information, in other words, one piece of information may act as both the first information and the second information, and the information may be referred to as DMRS sharing configuration information.

Usually, the network device adds the DMRS sharing configuration information to DCI, and transmits the DCI through a PDCCH.

Optionally, if at most two terminal devices are allowed to share one DMRS symbol, the shared DMRS symbol is always located in the first symbol of a mini-slot, but the mini-slot in which the shared DMRS symbol is located may be set according to a requirement. In this case, a length of the DMRS sharing configuration information may be two bits, and meanings of various values may be as follows:
(1) 00: one DMRS symbol is not shared with another terminal device;
(2) 01: one DMRS symbol is shared with another terminal device, and the shared DMRS symbol is located in a previous mini-slot;
(3) 10: one DMRS symbol is shared with another terminal device, and the shared DMRS symbol is located in a current mini-slot; and
(4) 11: one DMRS symbol is shared with another terminal device, and the shared DMRS symbol is located in a next mini-slot.

In this case, the preset numeric value set in this embodiment of this application may be expressed as {01, 10, 11}.

It can be easily understood that the preset numeric value set {01, 10, 11} is merely an example. A numeric value included in the preset numeric value set in this embodiment of this application may be predefined based on an actual requirement. This is not specifically limited in this embodiment of this application.

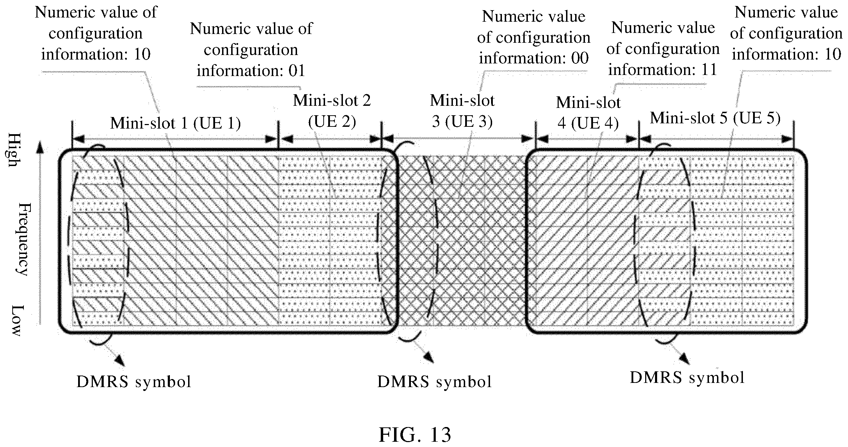

For example, as shown in FIG. 13, UE 1 and UE 2 share one DMRS symbol in the FDM manner, and the shared DMRS symbol is located in a mini-slot 1; UE 3 does not share one DMRS with other UE; and UE 4 and UE 5 share one DMRS in the FDM manner, and the shared DMRS symbol is located in a mini-slot 5. In this case, with reference to the foregoing descriptions, a numeric value of the DMRS sharing configuration information carried in DCI sent by the network device to the UE 1 is 10, a numeric value of the DMRS sharing configuration information carried in DCI sent by the network device to the UE 2 is 01, a numeric value of the DMRS sharing configuration information carried in DCI sent by the network device to the UE 3 is 00, a numeric value of the DMRS sharing configuration information carried in DCI sent by the network device to the UE 4 is 11, and a numeric value of the DMRS sharing configuration information carried in DCI sent by the network device to the UE 5 is 10.

It should be noted that, in the case shown in FIG. 13, the network device can notify a terminal device of a mini-slot grouping status by sending the DMRS sharing configuration information, that is, the terminal device can determine, based on the DMRS sharing configuration information, a mini-slot that belongs to a same group as a mini-slot allocated to the terminal device.

In FIG. 13, sharing a DMRS symbol by the UEs in the FDM manner may be alternatively replaced with sharing a DMRS symbol in the CDM manner. Details are not described herein.

Specifically, the instruction information in this embodiment of this application further includes third information, and the third information is used to indicate a value of N.

Optionally, the third information is specifically used to indicate specific mini-slots that are added to a group, or is specifically used to indicate a quantity of mini-slots included in a current mini-slot group and a sequence number of a mini-slot allocated to the target terminal device in the current mini-slot group.

It can be understood that both the specific mini-slots added to a group and the quantity of mini-slots included in the current mini-slot group indirectly reflect the value of N.

Similar to the first information or the second information, the third information may be added by the network device to DCI or group common DCI.

In addition, the instruction information in this embodiment of this application further includes fourth information. The fourth information is used to indicate an ordering position of each terminal device in the N terminal devices, in other words, used to indicate the sequence number of the mini-slot allocated to the target terminal device in the current mini-slot group.

Similar to the first information, the second information, or the third information, the fourth information may be added by the network device to DCI or group common DCI.

For example, if a quantity of mini-slots included in a mini-slot group is denoted as N, and the mini-sot allocated to the target terminal device is the k^{th} mini-slot in the mini-slot group (where k = 1, 2, ..., N), the third information is expressed by N and the fourth information is expressed by k. It is assumed that a maximum value of N is 4, a length of N is two bits, and a length of k is two bits. Meanings of values of N are as follows:
(1) 00: N = 1, indicating that a DMRS symbol is not shared;
(2) 01: N = 2, indicating that two terminal devices share one DMRS symbol;
(3) 10: N = 3, indicating that three terminal devices share one DMRS symbol; and
(4) 11: N = 4, indicating that four terminal devices share one DMRS symbol.

Likewise, meanings of values of k may be as follows (valid when N≠0):
(1) 00: k = 1, indicating that a mini-slot of a target terminal device is the first mini-slot in a current mini-slot group;
(2) 01: k = 2, indicating that a mini-slot of a target terminal device is the second mini-slot in a current mini-slot group;
(3) 10: k = 3, indicating that a mini-slot of a target terminal device is the third mini-slot in a current mini-slot group; and
(4) 11: k = 4, indicating that a mini-slot of a target terminal device is the fourth mini-slot in a current mini-slot group.

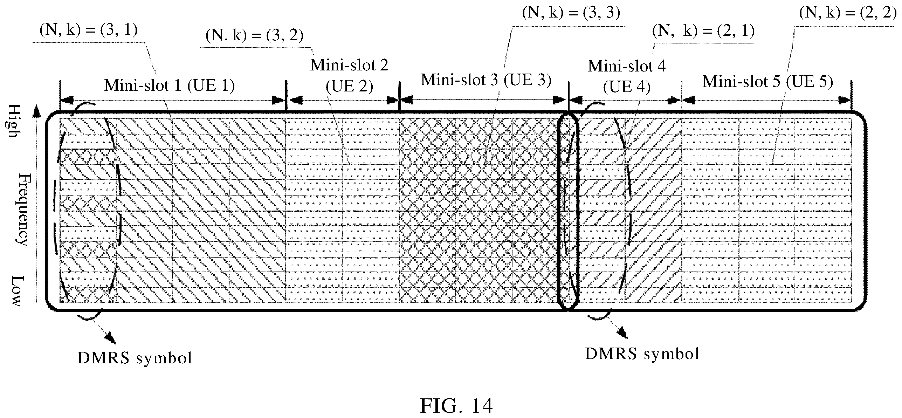

If the network device uses DCI to carry both the third information and the fourth information, the network device sends (N, k) to each terminal device. In this case, four bits are occupied. In an example shown in FIG. 14, the first three mini-slots are added to a group, the last two mini-slots are added to a group, and UEs share one DMRS symbol in the FDM manner. In this case, with reference to the foregoing descriptions, a numeric value of (N, k) carried in DCI sent by the network device to UE 1 is (3, 1), a numeric value of (N, k) carried in DCI sent by the network device to UE 2 is (3, 2), a numeric value of (N, k) carried in DCI sent by the network device to UE 3 is (3, 3), a numeric value of (N, k) carried in DCI sent by the network device to UE 4 is (2, 1), and a numeric value of (N, k) carried in DCI sent by the network device to UE 5 is (2, 2).

In FIG. 14, sharing a DMRS symbol by the UEs in the FDM manner may be alternatively replaced with sharing a DMRS symbol in the CDM manner. Details are not described herein.

To reduce indication overheads, N may be predefined in a standard, or preconfigured by the network device for a terminal device, for example, semi-statically configured by using RRC signaling or configured by using physical layer signaling. In this case, the network device needs to send only the fourth information, to indicate that the mini-slot corresponding to the target terminal device is the k^{th} mini-slot of N mini-slots. Compared with the method for sending (N, k) by the network device, the method in which the network device does not send the third information and sends only the fourth information may reduce the indication overheads by half, though indication flexibility is reduced.

Optionally, the instruction information in this embodiment of this application may include the second information, the third information, and the fourth information. That is, the network device sends the second information to indicate a location of the shared DMRS symbol, sends the third information to indicate a mini-slot group, and also sends the fourth information to indicate an ordering position of a mini-slot of the target terminal device in the mini-slot group.

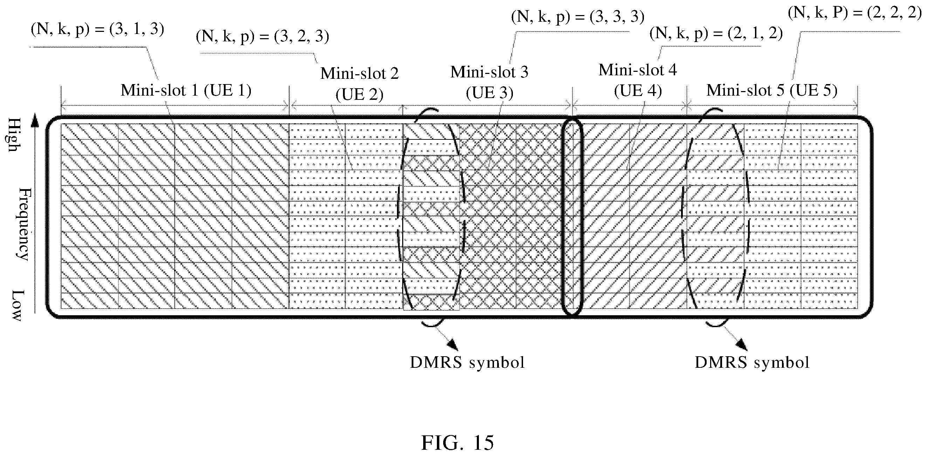

For example, with reference to FIG 14, if the second information is denoted as p, indicating that the shared DMRS symbol is located in the p^{th} mini-slot of N mini-slots, and the network device uses DCI to carry the second information, the third information, and the fourth information, the network device sends (N, k, p) to a terminal device. In an example shown in FIG. 15, the first three mini-slots are added to a group, the last two mini-slots are added to a group, and UEs share one DMRS symbol in the FDM manner. In this case, with reference to the foregoing descriptions, a numeric value of (N, k, p) carried in DCI sent by the network device to UE 1 is (3, 1, 3), a numeric value of (N, k, p) carried in DCI sent by the network device to UE 2 is (3, 2, 3), a numeric value of (N, k, p) carried in DCI sent by the network device to UE 3 is (3, 3, 3), a numeric value of (N, k, p) carried in DCI sent by the network device to UE 4 is (2, 1, 2), and a numeric value of (N, k, p) carried in DCI sent by the network device to UE 5 is (2, 2, 2).

In FIG. 15, sharing a DMRS symbol by the UEs in the FDM manner may be alternatively replaced with sharing a DMRS symbol in the CDM manner. Details are not described herein.

As described above, N may be predefined in the standard or preconfigured. Therefore, the network device may send only the second information and the fourth indication. In this case, in the example shown in FIG. 15, the network device may send only (k, p).

After the network device sends the scheduling information and the instruction information to each of the N terminal devices, each terminal device sends the uplink data based on the scheduling information and the instruction information that are obtained by the terminal device. Because processing procedures of all the terminal devices are the same, this embodiment of this application provides description by using a first terminal device as an example.

S101. A first terminal device receives the scheduling information and the instruction information that are sent by the network device.

S102. The first terminal device sends uplink data on an uplink data transmission resource indicated by the scheduling information, and sends, based on the instruction information, a DMRS included in the uplink data on a target OFDM symbol.

It can be learned from the description of S100 that the scheduling information sent by the network device is used to indicate the uplink data transmission resource of each terminal device. Therefore, after receiving the scheduling information sent by the network device, the first terminal device may send the uplink data of the first terminal device on the uplink data transmission resource indicated by the scheduling information.

With reference to the foregoing descriptions, it can be learned that in this embodiment of this application, the instruction information sent by the network device is used to instruct the N terminal devices to share the target OFDM symbol, and the instruction information includes at least two of the first information, the second information, the third information, the fourth indication, and the fifth information. The first terminal device determines, based on the instruction information received by the first terminal device, an RE occupied by the first terminal device in the target OFDM symbol, and sends the DMRS on the RE determined by the first terminal device.

Specifically, if the first terminal device obtains the second information, when a DMRS symbol is shared in the FDM manner, the first terminal device determines a frequency domain location of the DMRS RE of the first terminal device in the shared DMRS symbol based on the second information.

If various REs in a DMRS symbol are numbered 1 to 12 from a high frequency to a low frequency and REs of different terminal devices appear alternately, when the shared DMRS symbol is located in a mini-slot of the first terminal device, REs at corresponding RE locations of the first terminal device in the shared DMRS symbol are odd-numbered REs; when the shared DMRS symbol is located in a previous or next mini-slot, REs at corresponding RE locations of the first terminal device in the shared DMRS symbol are even-numbered REs.

For example, in FIG. 13, UE 1 and UE 2 share one DMRS symbol, and the shared DMRS symbol is located in a mini-slot 1, REs at corresponding RE locations of the UE 1 in the shared DMRS symbol are odd-numbered REs (the first RE, the third RE, ..., and the 11^{th} RE), and REs at corresponding RE locations of the UE 2 in the shared DMRS symbol are even-numbered REs (a second RE, a fourth RE, ..., and a twelfth RE).

Certainly, in addition to the foregoing method, another rule of determining a location of a DMRS RE of a terminal device may also be defined, provided that different terminal devices sharing one DMRS symbol occupy different REs. For example, when at most two terminal devices share one DMRS symbol, regardless of a mini-slot in which the shared DMRS symbol is located, a terminal device corresponding to a previous mini-slot always occupies odd-numbered REs in the shared DMRS symbol, and a terminal device corresponding to a next mini-slot always occupies even-numbered REs in the shared DMRS symbol.

Specifically, if the first terminal device obtains the fourth information, when a DMRS symbol is shared in the FDM manner, the first terminal device determines a frequency domain location of the DMRS RE of the first terminal device in the shared DMRS symbol based on the fourth information.

It is assumed that various REs in a DMRS symbol are numbered 1 to 12 from a high frequency to a low frequency, and REs of different terminal devices appear alternately. In FIG. 11, UE 1 is in the first mini-slot in a group 1, and therefore corresponding RE locations of the UE 1 in the DMRS symbol are 1, 4, 7, and 10; UE 2 is located in the second mini-slot in the group 1, and therefore corresponding RE locations of the UE 2 in the DMRS symbol are 2, 5, 8, and 11; UE 3 is located in the third mini-slot in the group 1, and therefore corresponding RE locations of the UE 3 in the DMRS symbol are 3, 6, 9, and 12.

Regardless of information that can be obtained by the first terminal device, when a DMRS symbol is shared in the CDM manner, terminal devices corresponding to different mini-slots in a same mini-slot group use different orthogonal DMRS sequences. For example, in FIG. 13, a mini-slot 1 and a mini-slot 2 are in a same group. Therefore, UE 1 and UE 2 use different orthogonal DMRS sequences. Terminal devices corresponding to mini-slots in different mini-slot groups may use a same DMRS sequence or different DMRS sequences. For example, in FIG. 13, a mini-slot 1 and a mini-slot 4 belong to different mini-slot groups. Therefore, UE 1 and UE 4 may use a same DMRS sequence or use different orthogonal DMRS sequences.

In this embodiment of this application, for a method for generating an orthogonal DMRS sequence, refer to the foregoing descriptions. Details are not described herein again.

After receiving the scheduling information and the instruction information, the N terminal devices each perform S101 and S102. Therefore, after each terminal device sends the uplink data of the terminal device, the network device may receive uplink data sent by the N terminal devices in a TDM manner. The uplink data includes the DMRS of each of the N terminal devices, the N terminal devices share the target OFDM symbol, and the target OFDM symbol is used to transmit the DMRS of each terminal device. After receiving the uplink data sent by the N terminal devices in the TDM manner, the network device performs the following step S103.

S103. The network device performs channel estimation on an uplink channel of each terminal device based on a DMRS of each terminal device, to obtain corresponding uplink data of each terminal device through parsing.

According to the data transmission method provided in this application, the N (N ≥ 2) terminal devices transmit the uplink data in the TDM manner, the N terminal devices share the target OFDM symbol, and the target OFDM symbol is used to transmit the DMRS of each terminal device. To be specific, the N terminal devices share one DMRS symbol, instead of each occupying one OFDM symbol for DMRS transmission. This effectively decreases a proportion of DMRS symbols and improves resource utilization.

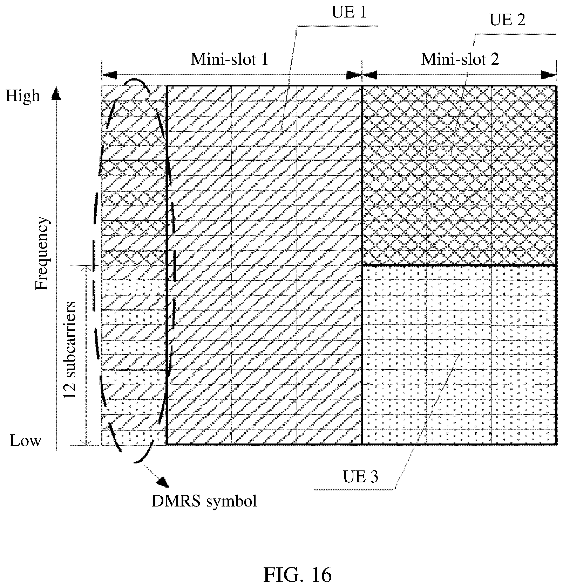

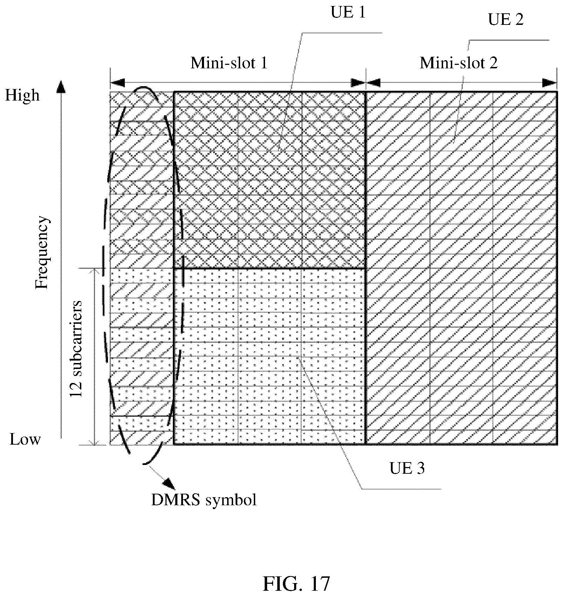

In addition to the foregoing descriptions, in actual application, uplink data transmission resources of different terminal devices may occupy different bandwidths in frequency domain. Therefore, a scenario shown in FIG. 16 or FIG. 17 occurs.

In FIG. 16 and FIG. 17, two mini-slots are added to a group, a shared DMRS symbol is located in the first symbol in the first mini-slot, and different UEs share the DMRS symbol in the FDM manner. In FIG 16, UE 1 occupies a mini-slot 1, and UE 2 and UE 3 occupy a mini-slot 2 in the FDM manner. In FIG 17, UE 1 and UE 3 occupy a mini-slot 1 in the FDM manner, and UE 2 occupies a mini-slot 2. In FIG. 16, sharing a DMRS symbol by the UEs in the FDM manner may be alternatively replaced with sharing a DMRS symbol in the CDM manner. Details are not described herein.

The process described in FIG. 10 is related only to time domain distribution of mini-slots, but not to frequency domain distribution of the mini-slots. Therefore, the process described in FIG. 10 is also applicable to the scenarios shown in FIG. 16 and FIG. 17.

In addition, the foregoing descriptions are provided by using uplink data transmission as an example. The data transmission method provided in this application is also applicable to downlink data transmission.

A difference between uplink data transmission and downlink data transmission is that data transmission directions are different. In uplink data transmission, different mini-slots correspond to different terminal devices, and different terminal devices send uplink data to a same network device. In downlink data transmission, a same network device sends downlink data to different terminal devices by using different mini-slots. Details about downlink data transmission are not described herein.

According to the data transmission method provided in this application, the N (N ≥ 2) terminal devices transmit the uplink data in the TDM manner, the N terminal devices share the target OFDM symbol, and the target OFDM symbol is used to transmit the DMRS of each terminal device. To be specific, the N terminal devices share one DMRS symbol, instead of each occupying one OFDM symbol for DMRS transmission. This effectively decreases a proportion of DMRS symbols and improves resource utilization.

An embodiment of this application provides a network device. The network device is configured to perform the steps performed by the network device in the foregoing data transmission method. The network device provided in this embodiment of this application may include modules corresponding to the corresponding steps.

In this embodiment of this application, the network device may be divided into functional modules according to the foregoing method example. For example, functional modules may be obtained through division in correspondence with functions, or two or more functions may be integrated into one processing module. The integrated module may be implemented in a form of hardware, or may be implemented in a form of a software functional module. In this embodiment of this application, module division is an example, and is merely logical function division. In actual implementation, another division manner may be used.

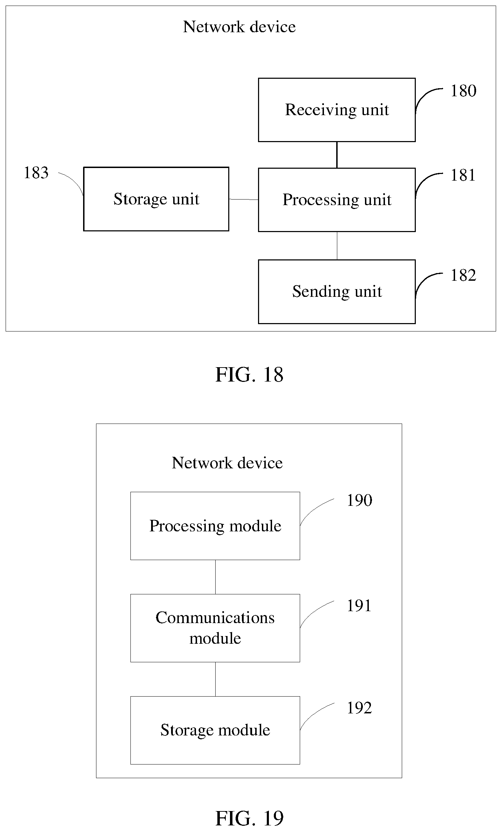

When functional modules are obtained through division in correspondence with functions, FIG. 18 is a possible schematic structural diagram of the network device in the foregoing embodiment. As shown in FIG. 18, the network device includes a receiving unit 180, a processing unit 181, and a sending unit 182.

The receiving unit 180 is configured to support the network device in performing S102 in the foregoing embodiment, and/or configured to support other processes of the technology described in this specification. The processing unit 181 is configured to support the network device in performing S103 in the foregoing embodiment, and/or configured to support other processes of the technology described in this specification. The sending unit 182 is configured to support the network device in performing S100 in the foregoing embodiment, and/or configured to support other processes of the technology described in this specification. All related content of various steps in the foregoing method embodiment may be cited in function descriptions of corresponding functional modules. Details are not described herein again. Certainly, the network device provided in this embodiment of this application includes but is not limited to the foregoing modules. For example, the network device may further include a storage unit 183. The storage unit 183 may be configured to store program code and data of the network device.

When an integrated unit is used, FIG. 19 is a possible schematic structural diagram of the network device in the foregoing embodiment.

As shown in FIG. 19, the network device includes a processing module 190 and a communications module 191. The processing module 190 is configured to control and manage an action of the network device. For example, the processing module 190 is configured to support the network device in performing S103 in the foregoing method embodiment, and/or configured to support other processes of the technology described in this specification. The communications module 191 is configured to support the network device in communicating with a terminal device. For example, the communications module 191 is configured to support the network device in performing S100 and S102 in the foregoing method embodiment. The network device may further include a storage module 192, and the storage module 192 may be configured to store program code and data of the network device.

The processing module 190 may be a processor or a controller, for example, may be a central processing unit (Central Processing Unit, CPU) or a digital signal processor (Digital Signal Processor, DSP). The processor/controller may implement or execute various example logical blocks, modules, and circuits described with reference to content disclosed in the embodiments of the present invention. The communications module 191 may be a communications interface, a transceiver circuit, a communications interface, or the like. The storage module 192 may be a memory.

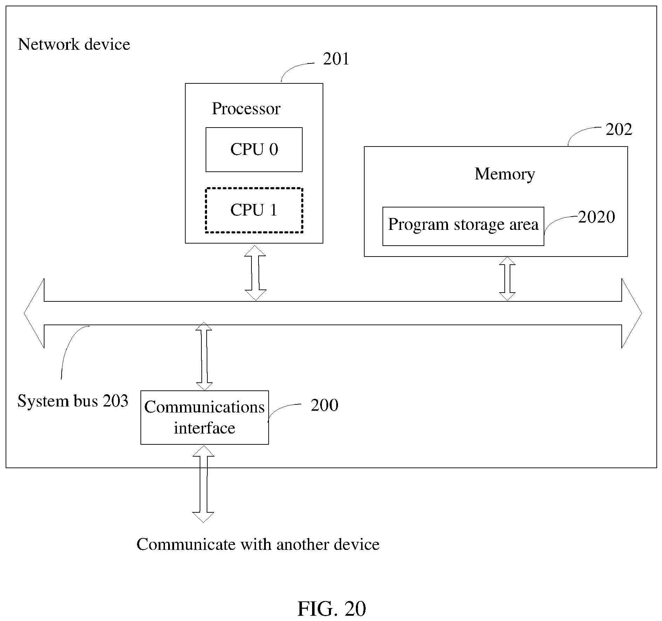

When the processing module 190 is a processor, the communications module 191 is a communications interface, and the storage module 192 is a memory, the network device in this embodiment of the present invention may be a network device shown in FIG. 20.

As shown in FIG. 20, the network device includes a communications interface 200, a processor 201, and a memory 202. The communications interface 200, the processor 201, and the memory 202 are connected by using a system bus 203, and communicate with each other.

When the network device runs, the network device performs the data transmission method in the embodiment shown in FIG. 10. For the specific data transmission method, refer to related descriptions in the embodiment shown in FIG. 10. Details are not described herein again.

The communications interface 200 is configured to communicate with another device or a communications network such as the Ethernet or a WLAN.

The memory 202 is configured to store a software program and an application module. The processor 201 runs the software program and the application module that are stored in the memory 202, to perform function applications of the network device and process data.

The memory 202 may mainly include a program storage area 2020. The program storage area 2020 may store an operating system and an application program that is necessary for at least one function, for example, sending instruction information.

The memory 202 may be a read-only memory (Read-Only Memory, ROM) or another type of static storage device that can store static information and instructions, a random access memory (Random Access Memory, RAM) or another type of dynamic storage device that can store information and instructions, an electrically erasable programmable read-only memory (Electrically Erasable Programmable Read-Only Memory, EEPROM), a magnetic disk storage medium or another magnetic storage device, or any other medium that can be configured to carry or store expected program code in a form of an instruction or a data structure and that can be accessed by a terminal device. No limitation is imposed thereon.

The memory 202 may exist alone and is connected to the processor 201 by using the system bus 203. Alternatively, the memory 202 may be integrated with the processor 201.

The processor 201 is a control center of the network device. The processor 201 connects to all components of the entire network device by using various interfaces and lines, and runs or executes the software program and/or the application module stored in the memory 202 and calls data stored in the memory 202, to perform functions of the network device and process data, so as to perform overall monitoring on the network device.

In a specific implementation, in an embodiment, the processor 201 may include one or more CPUs. For example, the processor 201 in FIG. 20 includes a CPU 0 and a CPU 1.

The system bus 203 may be classified into an address bus, a data bus, a control bus, and the like. For clear description in this embodiment of the present invention, all buses are expressed as the bus system 203 in FIG. 20.

Another embodiment of this application further provides a computer-readable storage medium. The computer-readable storage medium includes one or more pieces of program code. The one or more programs include an instruction. When a processor of a network device executes the program code, the network device performs the data transmission method shown in FIG. 10.

Another embodiment of this application further provides a computer program product. The computer program product includes a computer-executable instruction, and the computer-executable instruction is stored in a computer-readable storage medium. At least one processor of a network device may read the computer-executable instruction from the computer-readable storage medium. The at least one processor executes the computer-executable instruction, so that the network device performs the steps performed by the network device in the data transmission method shown in FIG. 10.

An embodiment of this application provides a terminal device. The terminal device is configured to perform the steps performed by the first terminal device in the foregoing data transmission method. The terminal device provided in this embodiment of this application may include modules corresponding to the corresponding steps.

In this embodiment of this application, the terminal device may be divided into functional modules according to the foregoing method example. For example, functional modules may be obtained through division in correspondence with functions, or two or more functions are integrated into one processing module. The integrated module may be implemented in a form of hardware, or may be implemented in a form of a software functional module. In this embodiment of this application, module division is an example, and is merely logical function division. In actual implementation, another division manner may be used.

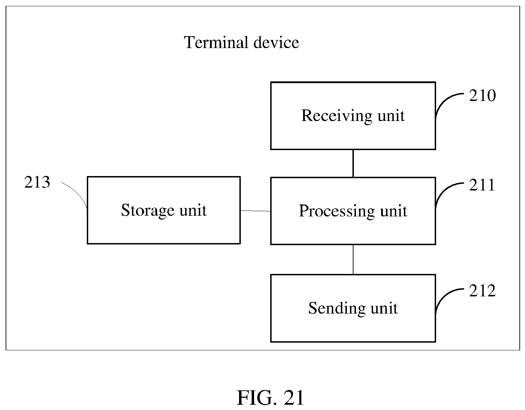

When functional modules are obtained through division in correspondence with functions, FIG. 21 is a possible schematic structural diagram of the terminal device in the foregoing embodiment.

As shown in FIG. 21, the terminal device includes a receiving unit 210, a processing unit 211, and a sending unit 212. The receiving unit 210 is configured to support the terminal device in performing S101 in the foregoing embodiment, and/or configured to support other processes of the technology described in this specification. The processing unit 211 is configured to support the terminal device in determining, after the receiving unit 210 receives scheduling information and instruction information, an uplink data transmission resource indicated by the scheduling information and a target OFDM symbol, and/or configured to support other processes of the technology described in this specification. The sending unit 212 is configured to support the terminal device in performing S102 and the like in the foregoing embodiment, and/or configured to support other processes of the technology described in this specification. All related content of various steps in the foregoing method embodiment may be cited in function descriptions of corresponding functional modules. Details are not described herein again. Certainly, the terminal device provided in this embodiment of this application includes but is not limited to the foregoing modules. For example, the terminal device may further include a storage unit 213. The storage unit 213 may be configured to store program code and data of the terminal device.

When an integrated unit is used, in this embodiment of this application, the processing unit 211 may be the processor 51 in FIG. 5, the receiving unit 210 and the sending unit 212 may be the antenna in FIG. 5, and the storage unit 213 may be the memory 54.

When the terminal device runs, the terminal device performs the data transmission method in the embodiment shown in FIG. 10. For the specific data transmission method, refer to related descriptions in the embodiment shown in FIG. 10. Details are not described herein again.

Another embodiment of this application further provides a computer-readable storage medium. The computer-readable storage medium includes one or more pieces of program code. The one or more programs include an instruction. When a processor of a terminal device executes the program code, the terminal device performs the data transmission method shown in FIG. 10.

Another embodiment of this application further provides a computer program product. The computer program product includes a computer-executable instruction, and the computer-executable instruction is stored in a computer-readable storage medium. At least one processor of a terminal device may read the computer-executable instruction from the computer-readable storage medium. The at least one processor executes the computer-executable instruction, so that the terminal device performs the steps performed by the first terminal device in the data transmission method shown in FIG. 10.

The foregoing descriptions about implementations allow a person skilled in the art to clearly understand that, for the purpose of convenient and brief description, division of the foregoing functional modules is taken as an example for illustration. In actual application, the foregoing functions can be allocated to different functional modules and implemented according to a requirement, that is, an inner structure of an apparatus is divided into different functional modules to implement all or some of the functions described above. For detailed working processes of the foregoing system, apparatus, and unit, refer to corresponding processes in the foregoing method embodiments. Details are not described herein again.

In the several embodiments provided in this application, it should be understood that the disclosed system, apparatus, and method may be implemented in other manners. For example, the described apparatus embodiment is merely an example. For example, the module or unit division is merely logical function division. In actual implementation, another division manner may be used. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electrical, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of the embodiments.

In addition, functional units in the embodiments of this application may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of this application essentially, or the part contributing to the prior art, or all or some of the technical solutions may be implemented in a form of a software product. The computer software product is stored in a storage medium and includes several instructions for instructing a computer device (which may be a personal computer, a server, a network device, or the like) to perform all or some of the steps of the methods described in the embodiments of this application. The foregoing storage medium includes: any medium that can store program code, such as a flash memory, a removable hard disk, a read-only memory, a random access memory, a magnetic disk, or an optical disc.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A data transmission method, comprising:
receiving, by a network device, uplink data sent by N terminal devices in a time division multiplexing TDM manner, wherein the uplink data comprises a demodulation reference signal DMRS of each of the N terminal devices, the N terminal devices share a target OFDM symbol, the target OFDM symbol is used to transmit the demodulation reference signal DMRS of each terminal device, and N ≥ 2; and
performing, by the network device, channel estimation on an uplink channel of each terminal device based on the DMRS of each terminal device, to obtain corresponding uplink data of each terminal device through parsing.

2. The data transmission method according to claim 1, wherein before the receiving, by a network device, uplink data sent by N terminal devices in a time division multiplexing TDM manner, the data transmission method further comprises:
sending, by the network device, scheduling information and instruction information to each terminal device, wherein the scheduling information is used to indicate an uplink data transmission resource of each terminal device, and the instruction information is used to instruct the N terminal devices to share the target OFDM symbol.

3. The data transmission method according to claim 2, wherein the instruction information comprises first information whose content is a first numeric value, the first information whose content is the first numeric value is used to instruct each terminal device to use an OFDM symbol sharing manner to transmit the DMRS, and the first numeric value is a value in a preset numeric value set.

4. The data transmission method according to claim 2 or 3, wherein the instruction information comprises second information, and the second information is used to indicate a location of the target OFDM symbol in uplink data transmission resources of the N terminal devices.

5. The data transmission method according to any one of claims 2 to 4, wherein the instruction information comprises third information, and the third information is used to indicate a value of N.

6. The data transmission method according to any one of claims 2 to 5, wherein the instruction information comprises fourth information, and the fourth information is used to indicate an ordering position of each terminal device in the N terminal devices.

7. The data transmission method according to any one of claims 2 to 6, wherein the instruction information comprises fifth information, the fifth information is used to indicate a multiplexing manner of an uplink resource occupied by each terminal device in the target OFDM symbol, and the multiplexing manner is frequency division multiplexing FDM or code division multiplexing CDM.

8. A data transmission method, comprising:
receiving, by a first terminal device, scheduling information and instruction information that are sent by a network device, wherein the scheduling information is used to indicate an uplink data transmission resource of the first terminal device, the instruction information is used to instruct N terminal devices to share a target OFDM symbol, the first terminal device is one of the N terminal devices, the target OFDM symbol is used to transmit a demodulation reference signal DMRS of each of the N terminal devices, and N ≥ 2; and
sending, by the first terminal device, uplink data on the uplink data transmission resource indicated by the scheduling information, and sending, based on the instruction information, a DMRS comprised in the uplink data on the target OFDM symbol.

9. The data transmission method according to claim 8, wherein the instruction information comprises first information whose content is a first numeric value, the first information whose content is the first numeric value is used to instruct the first terminal device to use an OFDM symbol sharing manner to transmit the DMRS, and the first numeric value is a value in a preset numeric value set.

10. The data transmission method according to claim 8 or 9, wherein the instruction information comprises second information, and the second information is used to indicate a location of the target OFDM symbol in uplink data transmission resources of the N terminal devices.

11. The data transmission method according to any one of claims 8 to 10, wherein the instruction information comprises third information, and the third information is used to indicate a value of N.

12. The data transmission method according to any one of claims 8 to 11, wherein the instruction information comprises fourth information, and the fourth information is used to indicate an ordering position of the first terminal device in the N terminal devices.

13. The data transmission method according to any one of claims 8 to 12, wherein the instruction information comprises fifth information, the fifth information is used to indicate a multiplexing manner of an uplink resource occupied by each terminal device in the target OFDM symbol, and the multiplexing manner is frequency division multiplexing FDM or code division multiplexing CDM.

14. A network device, comprising:
a receiving unit, configured to receive uplink data sent by N terminal devices in a time division multiplexing TDM manner, wherein the uplink data comprises a demodulation reference signal DMRS of each of the N terminal devices, the N terminal devices share a target OFDM symbol, the target OFDM symbol is used to transmit the demodulation reference signal DMRS of each terminal device, and N ≥ 2; and
a processing unit, configured to perform channel estimation on an uplink channel of each terminal device based on the DMRS of each terminal device that is received by the receiving unit, to obtain corresponding uplink data of each terminal device through parsing.

15. The network device according to claim 14, wherein the network device further comprises a sending unit, wherein
the sending unit is configured to send scheduling information and instruction information to each terminal device, wherein the scheduling information is used to indicate an uplink data transmission resource of each terminal device, and the instruction information is used to instruct the N terminal devices to share the target OFDM symbol.

16. The network device according to claim 15, wherein the instruction information comprises first information whose content is a first numeric value, the first information whose content is the first numeric value is used to instruct each terminal device to use an OFDM symbol sharing manner to transmit the DMRS, and the first numeric value is a value in a preset numeric value set.

17. The network device according to claim 15 or 16, wherein the instruction information comprises second information, and the second information is used to indicate a location of the target OFDM symbol in uplink data transmission resources of the N terminal devices.

18. The network device according to any one of claims 15 to 17, wherein the instruction information comprises third information, and the third information is used to indicate a value of N.

19. The network device according to any one of claims 15 to 18, wherein the instruction information comprises fourth information, and the fourth information is used to indicate an ordering position of each terminal device in the N terminal devices.

20. The network device according to any one of claims 15 to 19, wherein the instruction information comprises fifth information, the fifth information is used to indicate a multiplexing manner of an uplink resource occupied by each terminal device in the target OFDM symbol, and the multiplexing manner is frequency division multiplexing FDM or code division multiplexing CDM.

21. A terminal device, wherein the terminal device is a first terminal device, and the terminal device comprises:
a receiving unit, configured to receive scheduling information and instruction information that are sent by a network device, wherein the scheduling information is used to indicate an uplink data transmission resource of the first terminal device, the instruction information is used to instruct N terminal devices to share a target OFDM symbol, the first terminal device is one of the N terminal devices, the target OFDM symbol is used to transmit a demodulation reference signal DMRS of each of the N terminal devices, and N ≥ 2;
a processing unit, configured to determine the uplink data transmission resource indicated by the scheduling information received by the receiving unit, and determine the target OFDM symbol indicated by the instruction information received by the receiving unit; and
a sending unit, configured to send uplink data on the uplink data transmission resource determined by the processing unit, and send a DMRS comprised in the uplink data on the target OFDM symbol determined by the processing unit.

22. The terminal device according to claim 21, wherein the instruction information comprises first information whose content is a first numeric value, the first information whose content is the first numeric value is used to instruct the first terminal device to use an OFDM symbol sharing manner to transmit the DMRS, and the first numeric value is a value in a preset numeric value set.

23. The terminal device according to claim 21 or 22, wherein the instruction information comprises second information, and the second information is used to indicate a location of the target OFDM symbol in uplink data transmission resources of the N terminal devices.

24. The terminal device according to any one of claims 21 to 23, wherein the instruction information comprises third information, and the third information is used to indicate a value of N.

25. The terminal device according to any one of claims 21 to 24, wherein the instruction information comprises fourth information, and the fourth information is used to indicate an ordering position of the first terminal device in the N terminal devices.

26. The terminal device according to any one of claims 21 to 25, wherein the instruction information comprises fifth information, the fifth information is used to indicate a multiplexing manner of an uplink resource occupied by each terminal device in the target OFDM symbol, and the multiplexing manner is frequency division multiplexing FDM or code division multiplexing CDM.

27. A network device, wherein the network device comprises one or more processors, a memory, and a communications interface, wherein
the memory, the communications interface, and the one or more processors are connected by using a system bus; the network device communicates with another device by using the communications interface; the memory is configured to store computer program code, wherein the computer program code comprises an instruction; and when the one or more processors execute the instruction, the network device performs the data transmission method according to any one of claims 1 to 7.

28. A terminal device, wherein the terminal device comprises one or more processors, a memory, and a communications interface, wherein
the memory, the communications interface, and the one or more processors are connected by using a system bus; the terminal device communicates with another device by using the communications interface; the memory is configured to store computer program code, wherein the computer program code comprises an instruction; and when the one or more processors execute the instruction, the terminal device performs the data transmission method according to any one of claims 8 to 13.

29. A computer storage medium, wherein the computer storage medium stores computer program code, and when the computer program code runs on a network device, the network device performs the data transmission method according to any one of claims 1 to 7.

30. A computer storage medium, wherein the computer storage medium stores computer program code, and when the computer program code runs on a terminal device, the terminal device performs the data transmission method according to any one of claims 8 to 13.

31. A computer program product comprising an instruction, wherein when the computer program product runs on a network device, the network device performs the data transmission method according to any one of claims 1 to 7.

32. A computer program product comprising an instruction, wherein when the computer program product runs on a terminal device, the terminal device performs the data transmission method according to any one of claims 8 to 13.
